(19) Europäisches Patentamt
European Patent Office
Office européen des brevets

(11) **EP 4 727 055 A1**

(12) **EUROPEAN PATENT APPLICATION**

(43) Date of publication:
**15.04.2026   Bulletin 2026/16**

(21) Application number: **25208393.6**

(22) Date of filing: **13.10.2025**

(51) International Patent Classification (IPC):
***H04L 9/08*** (2006.01)

(52) Cooperative Patent Classification (CPC):
**H04L 9/085;** H04L 2209/46; H04L 2209/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.10.2024   US 202418914799**

(71) Applicants:
• **Beijing Zitiao Network Technology Co., Ltd.
Beijing 100190 (CN)**
• **Lemon Inc.
Grand Cayman, KY1-1205 (KY)**

(72) Inventors:
• **NIU, Yongchuan
Beijing, 100028 (CN)**
• **LU, Donghang
Culver City, 90230 (US)**
• **DAI, Wei
Culver City, 90230 (US)**
• **QIAN, Haohao
Beijing, 100028 (CN)**
• **YIN, Dong
Beijing, 100028 (CN)**
• **ZHAO, Yongjun
Beijing, 100028 (CN)**
• **WANG, Li
Beijing, 100028 (CN)**
• **YAN, Qiang
Beijing, 100028 (CN)**

(74) Representative: **Marks & Clerk LLP
15 Fetter Lane
London EC4A 1BW (GB)**

(54) **SECURE MULTI-PARTY EQUALITY TESTING**

(57) The present disclosure involves methods, apparatus, and systems for processing equality testing in secure multi-party computation (MPC). In one aspect, a method includes, generating, by a first party of the secure MPC, a difference between a secret share of a first value and a secret share of a second value. During a first iteration, the difference is partitioned into N sections each including M bits. For each section, a random bit is generated, a group of $2^M$ bits are generated based on the random bit, and a selected bit from the group of $2^M$ bits is sent to a second party of the secure MPC based on oblivious transfer (OT) protocol. The random bits of the N sections are concatenated as an input of a second iteration. The method further includes determining whether the first value equals the second value based on performing a plurality of iterations.

200

202 — Generate, by a first party of a secure multi-party computation (MPC), a first difference between a first secret share of a first value and a first secret share of a second value

204 — During a first iteration of the secure MPC, partition the first difference in binary form into N sections each including M bits, where N and M are positive integers

206 — For each section of the N sections: generate a first random bit, generate, based on the first random bit, a first group of $2^M$ bits, and send, to a second party of the secure MPC based on oblivious transfer (OT) protocol, a first selected bit from the first group of $2^M$ bits

208 — Concatenate first random bits of the N sections as a first input of a second iteration of the secure MPC

210 — Determine whether the first value equals the second value based on performing a plurality of iterations of the secure MPC comprising at least the first iteration and the second iteration

FIG. 2

**Description**

**TECHNICAL FIELD**

The present disclosure generally relates to data processing, and in particular, processing equality testing in secure multi-party computation.

**BACKGROUND**

Data plays an increasingly important role in modern society, driving advancements across various sectors. Effective collaboration among data custodians can be beneficial to the value of data. On the other hand, data collaboration may be compromised by isolated data silos due to the control of data by different entities, regulatory compliance on data privacy across countries, and frequent privacy breaches, etc.

Secure multi-party computation (MPC) is a technique developed to address some of the issues in data collaborations. MPC allows parties to jointly evaluate or analyze their respective private data without sharing the private data with others. Thus, data privacy of each party is protected. As data volumes increase, the computational and communication complexities of MPC also escalate significantly. Therefore, MPC protocols are also developed for specific use scenarios to meet practical data security and computational needs.

**SUMMARY**

The present disclosure relates to data processing, and in particular, processing equality testing in secure multi-party computation (MPC). One aspect of the present disclosure provides a computer-implemented method including generating, by a first party of a secure multi-party computation (MPC), a first difference between a first secret share of a first value and a first secret share of a second value. During a first iteration of the secure MPC, the method includes partitioning the first difference into N sections each including M bits, where N and M are positive integers. For each section of the N sections, the method includes generating a first random bit; generating, based on the first random bit, a first group of $2^M$ bits; and sending, to a second party of the secure MPC based on oblivious transfer (OT) protocol, a first selected bit from the first group of $2^M$ bits. During the first iteration, the method includes concatenating first random bits of the N sections as a first input of a second iteration of the secure MPC. The method further includes determining whether the first value equals the second value based on performing a plurality of iterations of the secure MPC including at least the first iteration and the second iteration.

In some implementations, the method further includes concatenating, by the second party, first selected bits of the N sections as a second input of the second iteration.

In some implementations, the method further includes, during the second iteration, partitioning the first input into R sections each including M bits, where R is a positive integer; for each section of the R sections, generating a second random bit, generating, based on the second random bit, a second group of $2^M$ bits, and sending, to the second party based on the OT protocol, a second selected bit from the second group of $2^M$ bits.

In some implementations, generating the first group of $2^M$ bits includes generating a $k^{th}$ bit, (k=0, 1, 2, ..., $2^M$-1), of the first group of $2^M$ bits by performing an exclusive OR (XOR) operation on the first random bit and an indicator bit. The indicator bit is 0 when a value of the corresponding section equals k, and the indicator bit is 1 when the value of the corresponding section is not equal to k.

In some implementations, the first selected bit is the $Q^{th}$ bit of the first group of $2^M$ bits, where Q equals a value of a section of a second difference corresponding to the section of the first difference. The second difference is between a second secret share of the second value and a second secret share of the first value.

In some implementations, a result of an XOR operation on the first random bit and the first selected bit is 0 when the value of the section of the first difference and the value of the corresponding section of the second difference are equal. The result of the XOR operation on the first random bit and the first selected bit is 1 when the value of the section of the first difference and the value of the corresponding section of the second difference are not equal.

In some implementations, the method further includes during a last iteration of the plurality of iterations, generating a last random bit for a first input of the last iteration; generating, based on the last random bit, a last group of $2^M$ bits; and sending, to the second party based on the OT protocol, a last selected bit from the last group of $2^M$ bits. Determining whether the first value and the second value are equal includes performing an XOR operation on the last random bit and the last selected bit.

In some implementations, determining whether the first value and the second value are equal includes performing one or more AND operations on a first input and a second input of a last iteration of the plurality of iterations.

In some implementations, the first secret share of the first value and the second secret share of the first value are arithmetic shares of the first value. The first secret share of the second value and the second secret share of the second value are arithmetic shares of the second value.

In some implementations, the secure MPC is a secure two-party computation.

Another aspect of the present disclosure provides one or more computer-readable storage media storing one or more instructions that, when executable by one or more computers, cause the one or more computers to perform operations including generating, by a first party of a secure multi-party computation (MPC), a first difference between a first secret share of a first value and a first secret share of a second value. During a first iteration of the secure MPC, the operations include partitioning the first difference into N sections each including M bits, where N and M are positive integers. For each section of the N sections, the operations include generating a first random bit; generating, based on the first random bit, a first group of $2^M$ bits; and sending, to a second party of the secure MPC based on oblivious transfer (OT) protocol, a first selected bit from the first group of $2^M$ bits. During the first iteration, the operations include concatenating first random bits of the N sections as a first input of a second iteration of the secure MPC. The operations further include determining whether the first value equals the second value based on results of a plurality of iterations of the secure MPC including at least the first iteration and the second iteration.

Another aspect of the present disclosure provides a computer-implemented system including one or more computers and one or more computer memory devices interoperably coupled with the one or more computers. The one or more computer memory devices have computer-readable storage media storing one or more instructions that, when executed by the one or more computers, perform one or more operations including generating, by a first party of a secure multi-party computation (MPC), a first difference between a first secret share of a first value and a first secret share of a second value. During a first iteration of the secure MPC, the operations include partitioning the first difference into N sections each including M bits, where N and M are positive integers. For each section of the N sections, the operations include generating a first random bit; generating, based on the first random bit, a first group of $2^M$ bits; and sending, to a second party of the secure MPC based on oblivious transfer (OT) protocol, a first selected bit from the first group of $2^M$ bits. During the first iteration, the operations include concatenating first random bits of the N sections as a first input of a second iteration of the secure MPC. The operations further include determining whether the first value equals the second value based on results of a plurality of iterations of the secure MPC including at least the first iteration and the second iteration.

While generally described as computer-implemented software embodied on tangible media that processes and transforms the respective data, some or all of the aspects can be computer-implemented methods or further included in respective systems or other devices for performing this described functionality. The details of these and other aspects and implementations of the present disclosure are set forth in the accompanying drawings and the description below. Other features, objects, and advantages of the disclosure will be apparent from the description and drawings, and from the claims.

## BRIEF DESCRIPTION OF DRAWINGS

FIG. 1 illustrates an example process of performing equality testing in a secure multi-party computation (MPC) system.

FIG. 2 illustrates a flowchart of the example method of performing equality testing in the secure MPC system as shown in FIG. 1.

FIG. 3 illustrates another example process of performing equality testing in a secure MPC system.

FIG. 4 illustrates a flow chart of the example method of performing equality testing in the secure MPC system as shown in FIG. 3.

FIG. 5 illustrates an example of a Vector Oblivious Shift Evaluation (VOSE) protocol using Boolean operation.

FIG. 6 illustrates an example of a Vector Oblivious Shift Evaluation (VOSE) protocol using arithmetic operation.

FIG. 7 illustrates another example process of performing equality testing in a secure MPC system.

FIG. 8 illustrates a flowchart of the example method of performing equality testing in the secure MPC system as shown in FIG. 7.

FIG. 9 illustrates a schematic diagram of an example computing system.

Like reference numbers and designations in the various drawings indicate like elements.

## DETAILED DESCRIPTION

This specification relates to methods, apparatuses, and systems for performing equality testing in secure multi-party computation (MPC). Secure equality testing is widely used in many secure computation scenarios, such as privacy-preserving machine learning, private set intersection, secure data mining, etc. Secure equality testing can calculate whether a first private input equals the second private input, without disclosing the private inputs to any party. In secure MPC, especially in secure two-party computation (2PC), secure equality testing remains the bottleneck that affects the performance of the secure MPC.

The present disclosure provides techniques to improve the speed and efficiency of secure equality testing in secure MPC. In some implementations, the secure MPC can perform equality testing in an iterative approach by invoking oblivious transfer (OT) protocol. In each iteration, a first party (P0) and a second party (P1) can each partition its input into a number of sections. By invoking the OT protocol for each section, the secure MPC can generate secret shares of an indicator indicating whether the corresponding sections of the PO's input and P1's input are equal. The secret shares of the indicator can be inputs of a subsequent iteration. As such, the number of communication rounds between the first party and the second party can be reduced, for example, compared to equality testing based on AND operations.

In some implementations, in one or more iterations, the secure MPC can invoke an equality testing protocol. The equality testing protocol includes local computation based on Vector Oblivious Shift Evaluation (VOSE) protocol, which can further reduce the number of rounds of online communication between the first party and the second party.

The described techniques can achieve one or more technical effects. For example, through multiple invocations of the OT protocol, the secure equality testing can be performed with higher speed and efficiency. For another example, the described techniques can reduce the number of communication rounds between the parties of the secure MPC, while balancing the volume of data transmission between parties of the secure MPC. Further, the described techniques can protect data security against two semi-honest parties. In some implementations, additional or different technical effects can be achieved.

Techniques of the present disclosure can be applied in a variety of practical scenarios. For example, in cryptographic key management, secure MPC can help build an environment for generating, storing, and managing cryptographic keys without the need for a hardware security appliance. For another example, in the healthcare domain, secure MPC can provide a safe solution for encrypting, storing, and transmitting sensitive medical data. For yet another example, in the financial sector, secure MPC can help financial organizations to jointly analyze financial trends without exposing individual customer data.

The above aspects and some other aspects of the present disclosure are discussed in greater detail below.

The table below shows some example notations and their corresponding meaning.

| Example Notations | |
|---|---|
| Notation | Meaning |
| $Z_{2^l}$ | For arithmetic sharing, a value x having *l* bits in length is shared additively in the ring |
| $Z_2$ | For Boolean sharing, each bit of a value x having *l* bits in length is shared independently in the ring $$Z_2$$ |
| $\langle x \rangle^A$ | Arithmetic share of x |
| $\langle x \rangle^B$ | Boolean share of x |
| $\langle x \rangle_i$ | Secret share of x that belongs to party i. |
| **1**{b} | Indicator function, which equals to 1 when b is true and equals to 0 when b is false. |
| $s \leftarrow S$ | Sampling an element s, uniformly at random from S. |
| ‖ | concatenation operation |
| $\lceil x \rceil$ | The smallest integer greater than or equal to $x$: $\lceil x \rceil = min\{n \in Z \mid n \geq x\}$ |

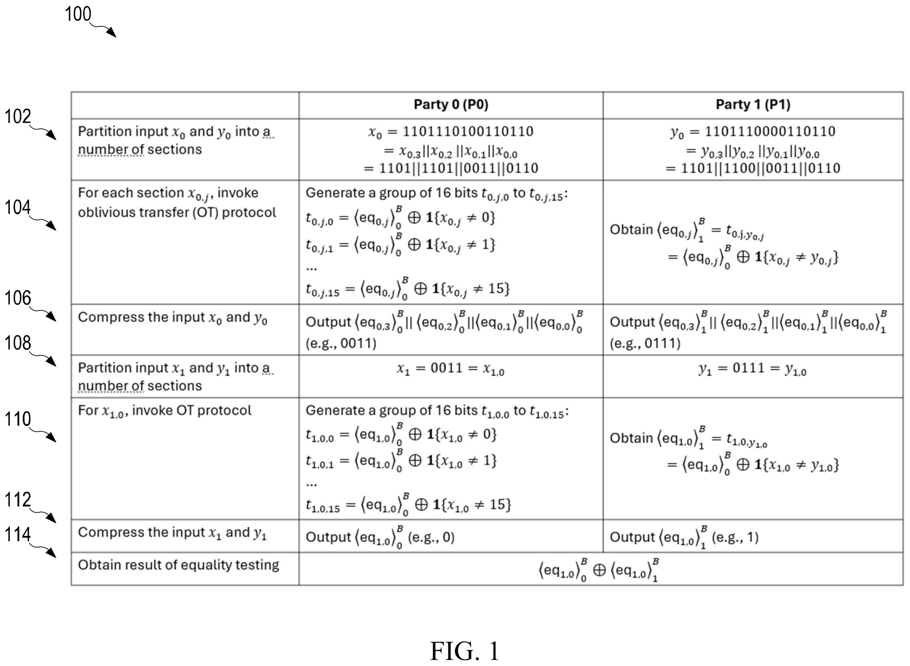

FIG. 1 illustrates an example process 100 of equality testing in a secure two-party computation (MPC) system. A first party participating in the secure MPC is denoted as Party 0 (PO), and a second party participating in the secure MPC is denoted as Party 1 (P1). The equality testing aims to determine whether two private inputs are equal (e.g., whether $a = b$), without disclosing the private inputs to any party.

As starter, the first party P0 has an arithmetic share of the private input $a$ denoted as $\langle a \rangle_0^A$ and an arithmetic share of the private input $b$ denoted as $\langle b \rangle_0^A$. The second party P1 has an arithmetic share of the private input $a$ denoted as $\langle a \rangle_1^A$, and an arithmetic share of the private input $b$ denoted as $\langle b \rangle_1^A$. The sum of arithmetic shares is the private input, such that $\langle a \rangle_0^A + \langle a \rangle_1^A = a$, and $\langle b \rangle_0^A + \langle b \rangle_1^A = b$. For example, the secure MPC can generate a random number as $\langle a \rangle_0^A$ and

send it to P0, and generate $a - \langle a \rangle_0^A$ as $\langle a \rangle_1^A$ and send it to P1. As such, the secure MPC system can determine whether $a = b$ by determining whether $\langle a \rangle_0^A - \langle b \rangle_0^A = \langle b \rangle_1^A - \langle a \rangle_1^A$.

The process 100 can determine whether $\langle a \rangle_0^A - \langle b \rangle_0^A = \langle b \rangle_1^A - \langle a \rangle_1^A$ in an iterative approach by invoking oblivious transfer (OT) protocol. P0 generates $\langle a \rangle_0^A - \langle b \rangle_0^A$ as its initial input $x_0$, and P1 generates $\langle b \rangle_1^A - \langle a \rangle_1^A$ as its initial input $y_0$, where $x_0$ and $y_0$ are values in binary form.

At 102, in a first iteration of the process 100, PO and P1 set $i = 0$. P0 partitions its input $x_i$ (which is $x_0$ for the first iteration) into a number of sections $x_{i,j}$, such that $x_i = X_{i,q_i-1} \| x_{i,q_i-2} \| ... \| x_{i,1} \| x_{i,0}$. The length of the input $x_i$ is $l_i$ bits. The length of each section is $m_i$ bits, so that the input is partitioned into $q_i = \lceil \frac{l_i}{m_i} \rceil$ sections. As an example, as shown in FIG. 1, P0 inputs $x_i = x_0 = 1101110100110110$, which is 16 bits in length. P0 can partition $x_0$ into four sections, each section being 4 bits in length: $x_{0,3} = 1101$, $x_{0,2} = 1101$, $x_{0,1} = 0011$, and $x_{0,0} = 0110$. That is, $l_i = 16$, $m_i = 4$, and $q_i = 4$.

Similarly, P1 partitions its input $y_i$ (which is $y_0$ for the first iteration) into a number of sections $y_{i,j}$, such that $y_i = y_{i,q_i-1} \| y_{i,q_i-2} \| ... \| y_{i,0}$. The length of the input $y_i$ is $l_i$ bits. The length of each section is $m_i$ bits, so that the input is partitioned into $q_i = \lceil \frac{l_i}{m_i} \rceil$ sections. As an example, as shown in FIG. 1, P1 inputs $y_i = y_0 = 1101110000110110$, which is 16 bits in length. P1 can partition $y_0$ into four sections, each section being 4 bits in length: $y_{0,3} = 1101$, $y_{0,2} = 1100$, $y_{0,1} = 0011$, and $y_{0,0} = 0110$.

At 104, for each section $x_{i,j}$ ($j = \{0,1,...,q_i - 1\}$), P0 can generate a random bit $\left\langle eq_{i,j} \right\rangle_0^B \leftarrow \{0,1\}$. The random bit is either 0 or 1. The random bit can be regarded as a Boolean share that belongs to P0. Based on the random bit $\left\langle eq_{i,j} \right\rangle_0^B$, P0 can generate a group of $M_i$ bits, each denoted as $t_{i,j,k}$, where $M_i = 2^{m_i}$, and $k = \{0,1,...,M_i - 1\}$. Each bit $t_{i,j,k}$ can be generated as $t_{i,j,k} = \left\langle eq_{i,j} \right\rangle_0^B \oplus \mathbf{1}\{x_{i,j} \neq k\}$.

As an example, for the section $x_{0,0} = 0110$, P0 generates a random bit 1 as $\left\langle eq_{0,0} \right\rangle_0^B$. P0 then generates a group of 16 bits, $t_{0,0,0}$ to $t_{0,0,15}$, where:

$$t_{0,0,0} = \left\langle eq_{0,0} \right\rangle_0^B \oplus \mathbf{1}\{x_{0,0} \neq 0\} = 1 \oplus 1 = 0,$$

$$t_{0,0,1} = \left\langle eq_{0,0} \right\rangle_0^B \oplus \mathbf{1}\{x_{0,0} \neq 1\} = 1 \oplus 1 = 0, ...,$$

$$t_{0,0,6} = \left\langle eq_{0,0} \right\rangle_0^B \oplus \mathbf{1}\{x_{0,0} \neq 6\} = 1 \oplus 0 = 1, ...,$$

and

$$t_{0,0,15} = \left\langle eq_{0,0} \right\rangle_0^B \oplus \mathbf{1}\{x_{0,0} \neq 15\} = 1 \oplus 1 = 0$$

By invoking the OT protocol, P1 can select and obtain one bit $t_{i,j,y_{i,j}} = \left\langle eq_{i,j} \right\rangle_0^B \oplus \mathbf{1}\{x_{i,j} \neq y_{i,j}\}$ from the group of $M_i$ bits. The selected bit $t_{i,j,y_{i,j}}$ can be denoted as a Boolean share $\left\langle eq_{i,j} \right\rangle_1^B$ that belongs to P1, since $\left\langle eq_{i,j} \right\rangle_0^B \oplus \left\langle eq_{i,j} \right\rangle_1^B = 0$ when $x_{i,j} = y_{i,j}$, and $\left\langle eq_{i,j} \right\rangle_0^B \oplus \left\langle eq_{i,j} \right\rangle_1^B = 1$ when $x_{i,j} \neq y_{i,j}$. As such, the MPC can determine whether $x_{i,j} = y_{i,j}$ by computing $\left(\mathrm{eq}_{i,j}\right)_0^B \oplus \left(\mathrm{eq}_{i,j}\right)_1^B$ .

As an example, the section of $y_0$ that corresponds to $x_{0,0} = 0110$ is $y_{0,0} = 0110$ (6 in decimal). Based on $y_{0,0}$, P1 selects and obtains the bit $t_{0,0,6}$ from the 16 bits $t_{0,0,0}$ to $t_{0,0,15}$. Therefore, $\left(\mathrm{eq}_{0,0}\right)_1^B = t_{0,0,6} = 1$ . Since $\left(\mathrm{eq}_{0,0}\right)_0^B \oplus \left(\mathrm{eq}_{0,0}\right)_1^B = 1 \oplus 1 = 0$ , it indicates that $x_{0,0} = y_{0,0}$.

At 106, P0 can output $q_i$ bits, each bit $\left(\mathrm{eq}_{i,j}\right)_0^B$ is a first secret share of an indicator that indicates whether the section $x_{i,j}$ equals the section $y_{i,j}$. Pn1 can output $q_i$ bits, each bit $\left(\mathrm{eq}_{i,j}\right)_1^B$ is a second secret share of the indicator. In this way, the input $x_i$, which is $l_i$ bits in length, can be compressed to a value in binary form having a shorter length ($q_i$ bits in length). As one example, as shown in FIG. 1, in the first iteration of the process 100, P0's input $x_0$, which is 16 bits in length, is compressed into 4 bits $\left(\mathrm{eq}_{0,3}\right)_0^B \| \left(\mathrm{eq}_{0,2}\right)_0^B \| \left(\mathrm{eq}_{0,1}\right)_0^B \| \left(\mathrm{eq}_{0,0}\right)_0^B$ (e.g., 0011). P1's input $y_0$, which is 16 bits in length, is compressed into 4 bits $\left(\mathrm{eq}_{0,3}\right)_1^B \| \left(\mathrm{eq}_{0,2}\right)_1^B \| \left(\mathrm{eq}_{0,1}\right)_1^B \| \langle\left(\mathrm{eq}_{0,0}\right)_1^B = t_{0,3,13} \| t_{0,2,12} \| t_{0,1,2} \| t_{0,0,6}$ (e.g., 0011).

At 108, the process 100 proceeds to a second iteration, where P0 and P1 set i = 1. The output of the first iteration can be the input of the second iteration. The input of P0 is $x_i = \left(\mathrm{eq}_{i-1,q_{i-1}-1}\right)_0^B \| \ldots \| \left(\mathrm{eq}_{i-1,0}\right)_0^B$ . The input of P1 is $y_i = \left(\mathrm{eq}_{i-1,q_{i-1}-1}\right)_1^B \| \ldots \| \left(\mathrm{eq}_{i-1,0}\right)_1^B$ . The secure MPC system can determine whether $x_0 = y_0$ by determining whether $x_1 = y_1$.

Similar to the first iteration, P0 partitions its input $x_i$ (which is $x_1$ for the second iteration) into a number of sections $x_{i,j}$, such that $x_i = x_{i,q_i-1} \| x_{i,q_i-2} \| \ldots \| x_{i,0}$. The length of the input $x_i$ is $l_i$ bits. The length of each section is $m_i$ bits, so that the input is partitioned into $q_i = \lceil \frac{l_i}{m_i} \rceil$ sections. As an example, as shown in FIG. 1, P0 inputs $x_i = x_1 = 0011$, which is 4 bits in length and can be viewed as one section having 4 bits in length. P1 inputs $y_i = y_1 = 0111$, which is 4 bits in length and can be viewed as one section having 4 bits in length. In this example, the second iteration can be the last iteration.

At 110, similar to 104, for each section $x_{i,j}$ ($j = \{0, 1, \ldots, q_i - 1\}$), P0 can generate a random bit $\left(\mathrm{eq}_{i,j}\right)_0^B \leftarrow \{0,1\}$ as a Boolean share. Based on the random bit $\left(\mathrm{eq}_{i,j}\right)_0^B$, P0 can generate a group of $M_i$ bits, each denoted as $t_{i,j,k}$, where $M_i = 2^{m_i}$, and $k = \{0, 1, \ldots, M_i - 1\}$. Each bit $t_{i,j,k}$ can be generated as $t_{i,j,k} = \left(\mathrm{eq}_{i,j}\right)_0^B \oplus \mathbf{1}\{x_{i,j} \neq k\}$ .

As an example, for the section $x_{1,0} = 0011$, P0 generates a random bit 0 as $\left(\mathrm{eq}_{1,0}\right)_0^B$. P0 then generates a group of 16 bit, $t_{1,0,0}$ to $t_{1,0,15}$, where:

$$t_{1,0,0} = \left(\mathrm{eq}_{1,0}\right)_0^B \oplus \mathbf{1}\{x_{1,0} \neq 0\} = 0 \oplus 1 = 1,$$

$$t_{1,0,1} = \left(\mathrm{eq}_{1,0}\right)_0^B \oplus \mathbf{1}\{x_{1,0} \neq 1\} = 0 \oplus 1 = 1, \ldots,$$

$$t_{1,0,3} = \left\langle \text{eq}_{1,0} \right\rangle_0^B \oplus \mathbf{1}\{x_{1,0} \neq 3\} = 0 \oplus 0 = 0, \ldots,$$

and

$$t_{1,0,15} = \left\langle \text{eq}_{1,0} \right\rangle_0^B \oplus \mathbf{1}\{x_{1,0} \neq 15\} = 0 \oplus 1 = 1$$

By invoking the oblivious transfer protocol, P1 can select and obtain one bit $t_{i,j,y_{i,j}} = \left\langle \text{eq}_{i,j} \right\rangle_0^B \oplus \mathbf{1}\{x_{i,j} \neq y_{i,j}\}$ from the group of $M_i$ bits. The selected bit $t_{i,j,y_{i,j}}$ can be denoted as a Boolean share $\left\langle \text{eq}_{i,j} \right\rangle_1^B$ that belongs to P1.

As an example, based on $y_{1,0} = 0111$, P1 selects and obtains the bit $t_{1,0,7}$ from the 16 bits $t_{1,0,0}$ to $t_{1,0,15}$. Therefore, $\left\langle \text{eq}_{1,0} \right\rangle_1^B = t_{1,0,7} = 1$.

At 112, for the second iteration where $i = 1$, P0 outputs $q_i$ bits, each bit $\left\langle \text{eq}_{i,j} \right\rangle_0^B$ representing a section $x_{i,j}$. P1 can output $q_i$ bits, each bit $t_{i,j,y_{i,j}}$ representing a section $y_{i,j}$. In this way, the input $x_i$ and $y_i$ are each further compressed to a value in binary form having a shorter length.

The process 100 can include multiple rounds of iteration, until the initial input $x_0$ and $y_0$ are each compressed to a single bit. In the last iteration, P0 and P1 each output a single bit.

At 114, by performing an XOR operation on the single-bit output of the last iteration, the secure MPC can determine whether $a = b$. In this way, through the iterative approach by invoking oblivious transfer (OT) protocol, the secure MPC system can obtain the result of equality testing.

As an example shown in FIG. 1, the process includes two rounds of iteration. In the second (last) iteration, P0 outputs $\left\langle \text{eq}_{1,0} \right\rangle_0^B = 0$, and P1 outputs $\left\langle \text{eq}_{1,0} \right\rangle_1^B = 1$. By computing $\left\langle \text{eq}_{1,0} \right\rangle_0^B \oplus \left\langle \text{eq}_{1,0} \right\rangle_1^B = 1$, the secure MPC system can determine that $x_1 \neq y_1$, which is equivalent to $x_0 \neq y_0$, which is equivalent to $a \neq b$.

In some implementations, for the last iteration where i=n and the input $x_n$ and $y_n$ each include only one section, P0 can generate a group of $M_n$ bits each denoted as $t_{n,0,k}$, where $M_n = 2^{m_n}$, and $k = \{0, 1, \ldots, M_n - 1\}$. Each bit $t_{n,0,k}$ can be generated as $t_{n,0,k} = \left\langle \text{eq}_{n,j} \right\rangle_0^B \oplus \mathbf{1}\{x_{n,0} = k\}$. As such, when performing XOR operation on the single-bit output of $\left\langle \text{eq}_{n,0} \right\rangle_0^B$ from P0 and the single-bit output $\left\langle \text{eq}_{n,0} \right\rangle_1^B$ from P1, $\left\langle \text{eq}_{n,0} \right\rangle_0^B \oplus \left\langle \text{eq}_{n,0} \right\rangle_1^B = 1$ indicates that $a = b$, and $\left\langle \text{eq}_{n,0} \right\rangle_0^B \oplus \left\langle \text{eq}_{n,0} \right\rangle_1^B = 0$ indicates that $a \neq b$.

It should be noted that the example process 100 is for illustration purposes. The initial input $x_0$ and $y_0$ can have any suitable length in bits, the input of each iteration can be partitioned into sections of any suitable length in bits, and the process can include any suitable number of rounds of iteration. For example, the initial input $x_0$ and $y_0$ can each include 64 bits, and each be partitioned into 16 sections (each section has a length of 4 bits). The first iteration can compress $x_0$ and $y_0$ into $x_1$ and $y_1$, $x_1$ and $y_1$ each having a length of 16 bits. The second iteration can compress $x_1$ and $y_1$ into $x_2$ and $y_2$, $x_2$ and $y_2$ each having a length of 4 bits. The third (last) iteration can compress $x_2$ and $y_2$ into a single bit. By performing an XOR operation on the two single bits, the secure MPC system can determine whether $a = b$.

Below is an example algorithm for process 100.

$P_0$ locally computes $\langle d \rangle_0^A = \langle a \rangle_0^A - \langle b \rangle_0^A$, $P_1$ locally computes $\langle d \rangle_1^A = \langle a \rangle_1^A - \langle b \rangle_1^A$.

$P_0$ sets $x_0 = \langle d \rangle_0^A$, $P_1$ sets $y_0 = -\langle d \rangle_1^A$.

$P_0$ and $P_1$ set $i = 0$.

**do**

> $P_0$ parses its input as $x_i = x_{i,q_i-1} \| x_{i,q_i-2} \| \ldots \| x_{i,0}$, and $P_1$ parses its input as $y_i = y_{i,q_i-1} \| y_{i,q_i-2} \| \ldots \| y_{i,0}$, where $x_{i,j}, y_{i,j} \in \{0,1\}^{m_i}$, $q_i = \lceil \frac{l_i}{m_i} \rceil$, the bit lengths of $x_i$ and $y_i$ are equal, denoted as $l_i$.

> Let $M_i = 2^{m_i}$

> **for** $j = \{0,1,\ldots,q_i-1\}$ **do**

>> $P_0$ samples $\left\langle eq_{i,j} \right\rangle_0^B \leftarrow \{0,1\}$

>> **for** $k = \{0,1,\ldots,M_i-1\}$ **do**

>>> **if** $q_i > 1$

>>>> $P_0$ sets $t_{i,j,k} = \left\langle eq_{i,j} \right\rangle_0^B \oplus \mathbf{1}\{x_{i,j} \neq k\}$

>>> **else**

>>>> $P_0$ sets $t_{i,j,k} = \left\langle eq_{i,j} \right\rangle_0^B \oplus \mathbf{1}\{x_{i,j} = k\}$

>>> **end if**

>> **end for**

>> $P_0$ and $P_1$ invoke an instance of 1 out of $M_i$ OT, where $P_0$ is the sender with inputs $\{t_{i,j,k}\}_k$ and $P_1$ is the receiver with input $y_{i,j}$. $P_1$ sets its output as $\left\langle eq_{i,j} \right\rangle_1^B$.

> **end for**

> $P_0$ and $P_1$ compute $i = i + 1$.

> $P_0$ sets $x_i = \left\langle eq_{i-1,q_{i-1}-1} \right\rangle_0^B \| \ldots \| \left\langle eq_{i-1,0} \right\rangle_0^B$

> $P_1$ sets $y_i = \left\langle eq_{i-1,q_{i-1}-1} \right\rangle_1^B \| \ldots \| \left\langle eq_{i-1,0} \right\rangle_1^B$

**while** $q_{i-1} > 1$

$P_0$ and $P_1$ set their output as $\left\langle eq_{i-1,0} \right\rangle_0^B$ and $\left\langle eq_{i-1,0} \right\rangle_1^B$, respectively.

In some implementations, the last round iteration of process 100 can be performed based on AND operation, instead of based on OT protocol. In the last iteration where PO's input is $x_n = \left\langle eq_{n-1,q_{n-1}-1} \right\rangle_0^B \| \ldots \| \left\langle eq_{n-1,0} \right\rangle_0^B$ and PO's input is $y_n = \left\langle eq_{n-1,q_{n-1}-1} \right\rangle_1^B \| \ldots \| \left\langle eq_{n-1,0} \right\rangle_1^B$, the secure MPC can determine whether $x_n = y_n$ by computing

$$\mathbf{1}\left\{\left\langle \mathrm{eq}_{n-1,q_{n-1}-1}\right\rangle_0^B = \left\langle \mathrm{eq}_{n-1,q_{n-1}-1}\right\rangle_1^B\right\} AND \dots AND\ \mathbf{1}\left\{\left\langle \mathrm{eq}_{n-1,q_0-1}\right\rangle_0^B = \left\langle \mathrm{eq}_{n-1,q_0-1}\right\rangle_1^B\right\}$$ . If the result of the AND operations is 1, $x_n = y_n$. If the result of the AND operations is 0, $x_n \neq y_n$.

As an example shown in FIG. 1, PO's input of the last iteration is $x_1$ = 0011, P1's input of the last iteration is $y_1$ = 0111. P1 can locally compute $y_1' = y_1 \oplus 0111 = 1000$. In the first round of AND operation, the secure MPC can perform an XOR operation on the first bit of $x_1$ and the first bit of $y_1'$, an XOR operation on the second bit of $x_1$ and the second bit of $y_1'$, and an AND operation on the results of the two XOR operations, such that $(0 \oplus 1)AND(0 \oplus 0) = 1\ AND\ 0 = 0$. The result can be a first input of the second round of AND operation. Then, the secure MPC can perform an XOR operation on the third bit of $x_1$ and the third bit of $y_1'$, an XOR operation on the fourth bit of $x_1$ and the fourth bit of $y_1'$, and an AND operation on the results of the two XOR operations, such that $(1 \oplus 0)\ AND\ (1 \oplus 0) = 1\ AND\ 1 = 1$. The result can be a second input of the second round of AND operation. In the second round of AND operation, the secure MPC can perform an AND operation on the first input and the second input, such that $0\ AND\ 1 = 0$. If the result of the last AND operation is 0, it means $x_1 \neq y_1$, which is equivalent to $a \neq b$. If the result of the last AND operation is 1, it means $x_1 = y_1$, which is equivalent to $a = b$.

Below is an example algorithm for process 100 where the last iteration performs equality testing based on AND operations.

---

$P_0$ locally computes $\langle d \rangle_0^A = \langle a \rangle_0^A - \langle b \rangle_0^A$, $P_1$ locally computes $\langle d \rangle_1^A = \langle a \rangle_1^A - \langle b \rangle_1^A$.

$P_0$ sets $x_0 = \langle d \rangle_0^A$, $P_1$ sets $y_0 = -\langle d \rangle_1^A$.

---

$P_0$ and $P_1$ set $i = 0$.

**do**

$P_0$ parses its input as $x_i = x_{i,q_i-1} \| x_{i,q_i-2} \| \ldots \| x_{i,0}$, and $P_1$ parses its input as $y_i = y_{i,q_i-1} \| y_{i,q_i-2} \| \ldots \| y_{i,0}$, where $x_{i,j}, y_{i,j} \in \{0,1\}^{m_i}$, $q_i = \lceil \frac{l_i}{m_i} \rceil$, the bit lengths of $x_i$ and $y_i$ are equal, denoted as $l_i$.

Let $M_i = 2^{m_i}$

**for** $j = \{0,1,\ldots,q_i - 1\}$ **do**

$P_0$ samples $\left\langle \mathrm{eq}_{i,j} \right\rangle_0^B \leftarrow \{0,1\}$

**for** $k = \{0,1,\ldots,M_i - 1\}$ **do**

**if** $q_i > T$

$P_0$ sets $t_{i,j,k} = \left\langle \mathrm{eq}_{i,j} \right\rangle_0^B \oplus \mathbf{1}\{x_{i,j} \neq k\}$

**else**

$P_0$ sets $t_{i,j,k} = \left\langle \mathrm{eq}_{i,j} \right\rangle_0^B \oplus \mathbf{1}\{x_{i,j} = k\}$

**end if**

**end for**

$P_0$ and $P_1$ invoke an instance of 1 out of $M_i$ OT, where $P_0$ is the sender with inputs $\{t_{i,j,k}\}_k$ and $P_1$ is the receiver with input $y_{i,j}$. $P_1$ sets its output as $\left\langle \mathrm{eq}_{i,j} \right\rangle_1^B$.

**end for**

$P_0$ and $P_1$ compute $i = i + 1$.

$P_0$ sets $x_i = \left\langle \mathrm{eq}_{i-1,q_{i-1}-1} \right\rangle_0^B \| \ldots \| \left\langle \mathrm{eq}_{i-1,0} \right\rangle_0^B$

$P_1$ sets $y_i = \left\langle \mathrm{eq}_{i-1,q_{i-1}-1} \right\rangle_1^B \| \ldots \| \left\langle \mathrm{eq}_{i-1,0} \right\rangle_1^B$

**while** $q_{i-1} > T$

**for** $k = \{1, \ldots, \lceil log(q_i) \rceil\}$ **do**

**for** $j = \{0,1,\ldots,q_i/2^k - 1)\}$ **do**

for $b \in \{0,1\}$, $P_b$ invokes **AND** with inputs $\left\langle eq_{k-1,2j} \right\rangle_b^B$ and $\left\langle eq_{k-1,2j+1} \right\rangle_b^B$ to learn output $\left\langle eq_{k,j} \right\rangle_b^B$.

**end for**

**end for**

$P_0$ and $P_1$ set their output as $\left\langle eq_{\lceil log(q_{i-1}) \rceil, 0} \right\rangle_0^B$ and $\left\langle eq_{\lceil log(q_{i-1}) \rceil, 0} \right\rangle_1^B$, respectively.

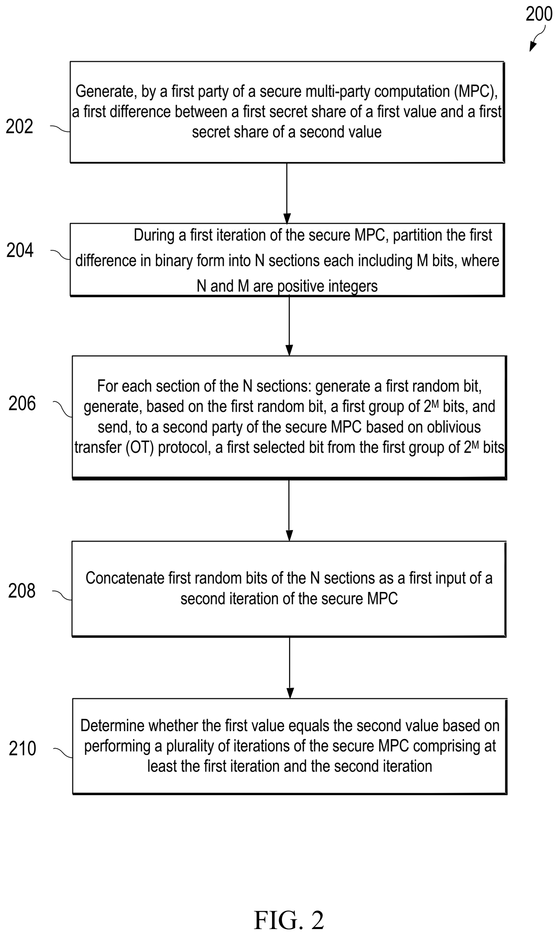

FIG. 2 illustrates a flow chart of the example method 200 of performing equality testing as shown in FIG. 1. The operations shown in method 200 may not be exhaustive and that other operations can be performed as well before, after, or in between any of the illustrated operations. Further, some of the operations may be performed simultaneously, or in a different order than shown in FIG. 2. In some implementations, some of the operations may be performed by a computer, or multiple computers based on secure MPC.

At 202, a first party (e.g., P0 of FIG. 1) of a secure multi-party computation (MPC) generates a first difference (e.g., $x_0$ of FIG. 1) between a first secret share (e.g., arithmetic share $\langle a \rangle_0^A$) of a first value (e.g., private input $a$) and a first secret share (e.g., arithmetic share $\langle b \rangle_0^A$) of a second value (e.g., private input $b$). The second party (e.g., P1 of FIG. 1) of the secure MPC generates a second difference (e.g., $y_0$ of FIG. 1) between a second secret share (e.g., arithmetic share $\langle b \rangle_1^A$) of the second value and a second secret share (e.g., arithmetic share $\langle a \rangle_1^A$) of the first value.

At 204, during a first iteration of the secure MPC, the first party partitions the first difference into N sections (e.g., $x_0 = x_{0,3}\|x_{0,2}\|x_{0,1}\|x_{0,0}$) each including M bits, where N and M are positive integers. The second party partitions the second difference into N sections (e.g., $y_0 = y_{0,3}\|y_{0,2}\|y_{0,1}\|y_{0,0}$) each including M bits.

At 206, for each section of the N sections, the first party generates a first random bit (e.g., $\left( \text{eq}_{0,j} \right)_0^B$ of FIG. 1), generates a first group of $2^M$ bits (e.g., $t_{0,j,0}$ to $t_{0,j,15}$ of FIG. 1) based on the first random bit, and sends, to the second party and based on oblivious transfer (OT) protocol, a first selected bit (e.g., $t_{0,j,y_0,j}$, also denoted as $\left( \text{eq}_{0,j} \right)_1^B$ in FIG. 1) from the first group of $2^M$ bits.

In some implementations, the first group of $2^M$ bits are generated by generating a $k^{\text{th}}$ bit, (k=0, 1, 2, ..., $2^M$-1), of the first group of $2^M$ bits by performing an exclusive OR (XOR) operation on the first random bit and an indicator bit (e.g., $\mathbf{1}\{x_{0,j} \neq k\}$ of FIG. 1). The indicator bit is 0 when a value of the corresponding section equals k, and the indicator bit is 1 when the value of the section is not equal to k.

Further, the first selected bit is the $Q^{\text{th}}$ bit of the first group of $2^M$ bits, where Q equals the value of a corresponding section (e.g., $y_{0,j}$ of FIG. 1) of the second difference. As such, a result of an XOR operation on the first random bit and the first selected bit is 0 when the value of the section of the first difference and the value of the corresponding section of the second difference are equal. The result of the XOR operation on the first random bit and the first selected bit is 1 when the value of the section of the first difference and the value of the corresponding section of the second difference are not equal.

At 208, the first party concatenates first random bits of the N sections as a first input (e.g., $x_1$ of FIG. 1) of a second iteration of the secure MPC. The second party concatenates first selected bits of the N sections as a second input (e.g., $y_1$ of FIG. 1) of the second iteration.

In some implementations, during the second iteration, the first party partitions the first input into R sections each including M bits, and the second party partitions the second input into R sections each including M bits, where R is a positive integer. For each section of the R sections, the first party generates a second random bit (e.g., $\left( \text{eq}_{1,0} \right)_0^B$ of FIG. 1), generates a second group of $2^M$ bits (e.g., $t_{1,0,0}$ to $t_{1,0,15}$ of FIG. 1) based on the second random bit, and sends, to the second party based on the OT protocol, a second selected bit (e.g., $t_{1,0,y_{1,0}}$, also denoted as $\left( \text{eq}_{1,0} \right)_1^B$ of FIG. 1) from the second group of $2^M$ bits.

At 210, the secure MPC determines whether the first value equals the second value based on results of a plurality of iterations of the secure MPC. The plurality of iterations includes at least the first iteration and the second iteration.

In some implementations, the last iteration of the plurality of iterations is also performed based on OT protocol. During the last iteration, the first party generates a last random bit, generates a last group of $2^M$ bits based on the last random bit, and sends, to the second party based on the OT protocol, a last selected bit from the last group of $2^M$ bits. The secure MPC determines whether the first value and the second value are equal by performing an XOR operation on the last random bit and the last selected bit.

In some implementations, the last iteration of the plurality of iterations is performed based on AND operations. The secure MPC determines whether the first value and the second value are equal by performing one or more AND operations on a first input and a second input of the last iteration.

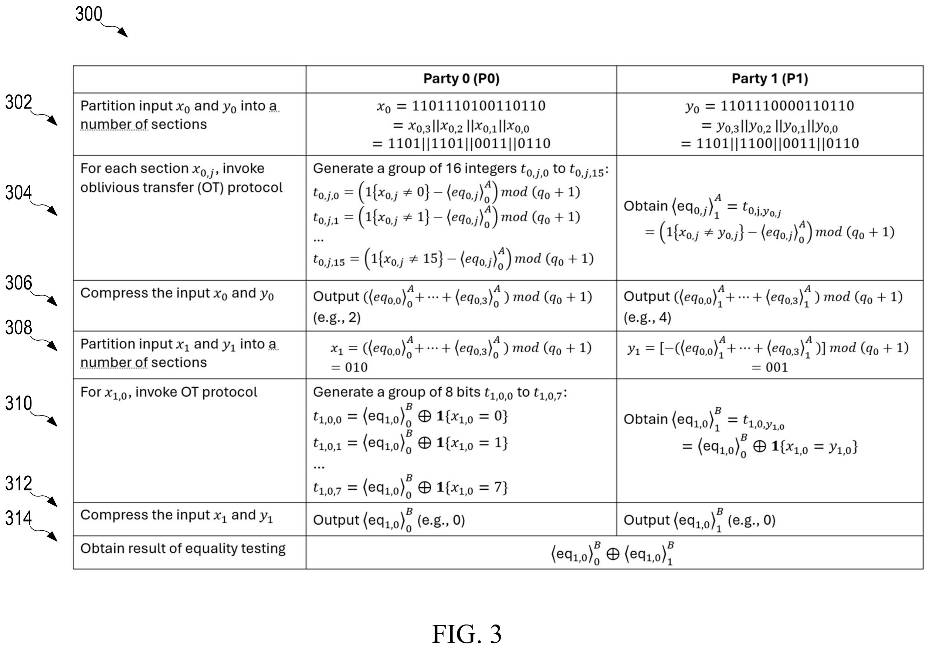

FIG. 3 illustrates an example process 300 of equality testing in a secure two-party computation (MPC) system. A first party participating in the secure MPC is denoted as Party 0 (P0), and a second party participating in the secure MPC is denoted as Party 1 (P1). The equality testing aims to determine whether two private inputs are equal (e.g., whether $a = b$), without disclosing the private inputs to any party.

As starter, the first party P0 has an arithmetic share of the private input $a$ denoted as $\langle a \rangle_0^A$ and an arithmetic share of the private input $b$ denoted as $\langle b \rangle_0^A$. The second party P1 has an arithmetic share of the private input $a$ denoted as $\langle a \rangle_1^A$,

and an arithmetic share of the private input $b$ denoted as $\langle b \rangle_1^A$. The sum of arithmetic shares is the private input, such that $\langle a \rangle_0^A + \langle a \rangle_1^A = a$, and $\langle b \rangle_0^A + \langle b \rangle_1^A = b$. For example, the secure MPC can generate a random integer as $\langle a \rangle_0^A$ and send it to P0, and generate $a - \langle a \rangle_0^A$ as $\langle a \rangle_1^A$ and send it to P1. As such, the secure MPC system can determine whether $a = b$ by determining whether $\langle a \rangle_0^A - \langle b \rangle_0^A = \langle b \rangle_1^A - \langle a \rangle_1^A$.

The process 300 can determine whether $\langle a \rangle_0^A - \langle b \rangle_0^A = \langle b \rangle_1^A - \langle a \rangle_1^A$ in an iterative approach by invoking oblivious transfer (OT) protocol. P0 generates $\langle a \rangle_0^A - \langle b \rangle_0^A$ as its initial input $x_0$, and P1 generates $\langle b \rangle_1^A - \langle a \rangle_1^A$ as its initial input $y_0$, where $x_0$ and $y_0$ are values in binary form.

At 302, in a first iteration of the process 300, P0 and P1 set $i = 0$. P0 partitions its input $x_i$ (which is $x_0$ for the first iteration) into a number of sections $x_{i,j}$, such that $x_i = x_{i,q_i-1} \| x_{i,q_i-2} \| ... \| x_{i,1} \| x_{i,0}$. The length of the input $x_i$ is $l_i$ bits. The length of each section is $m_i$ bits, so that the input is partitioned into $q_i = \lceil \frac{l_i}{m_i} \rceil$ sections. As an example, as shown in FIG. 3, P0 inputs $x_i = x_0 = 1101110100110110$, which is 16 bits in length. P0 can partition $x_0$ into four sections, each section being 4 bits in length: $x_{0,3} = 1101$, $x_{0,2} = 1101$, $x_{0,1} = 0011$, and $x_{0,0} = 0110$.

Similarly, P1 partitions its input $y_i$ (which is $y_0$ for the first iteration) into a number of sections $y_{i,j}$, such that $y_i = y_{i,q_i-1} \| y_{i,q_i-2} \| ... \| yi_{,0}$. The length of the input $y_i$ is $l_i$ bits. The length of each section is $m_i$ bits, so that the input is partitioned into $q_i = \lceil \frac{l_i}{m_i} \rceil$ sections. As an example, as shown in FIG. 3, P1 inputs $y_i = y_0 = 1101110000110110$, which is 16 bits in length. P1 can partition $y_0$ into four sections, each section being 4 bits in length: $y_{0,3} = 1101$, $y_{0,2} = 1300$, $y_{0,1} = 0011$, and $y_{0,0} = 0110$. That is, $l_i = 16$, $m_i = 4$, and $q_i = 4$.

At 304, for each section $x_{i,j}$ ($j = \{0, 1, ..., q_i - 1\}$), P0 can generate a random integer $\left( eq_{i,j} \right)_0^A \leftarrow \{0, 1, ..., q_i\}$. The random integer is sampled from 0 to $q_i$. The random integer can be regarded as an arithmetic share that belongs to P0. Based on the random integer $\left( eq_{i,j} \right)_0^A$, P0 can generate a group of $M_i$ integers, each denoted as $t_{i,j,k}$, where $M_i = 2^{m_i}$, and $k = \{0, 1, ..., M_i - 1\}$. Each bit $t_{i,j,k}$ can be generated as $t_{i,j,k} = \left( \mathbf{1}\{x_{i,j} \neq k\} - \left( eq_{i,j} \right)_0^A \right) mod(q_i + 1)$.

As an example, for the section $x_{0,0} = 0110$, P0 generates a random integer 4 as $\left( eq_{0,0} \right)_0^A$. P0 then generates a group of 16 integers, $t_{0,0,0}$ to $t_{0,0,15}$, where:

$$t_{0,0,0} = \left( \mathbf{1}\{x_{0,0} \neq 0\} - \left( eq_{0,0} \right)_0^A \right) mod (q_0 + 1) = (1 - 4) \bmod 5 = 2,$$

$$t_{0,0,1} = \left( \mathbf{1}\{x_{0,0} \neq 1\} - \left( eq_{0,0} \right)_0^A \right) mod (q_0 + 1) = (1 - 4) \bmod 5 = 2, ...,$$

$$t_{0,0,6} = \left( \mathbf{1}\{x_{0,0} \neq 6\} - \left( eq_{0,0} \right)_0^A \right) mod (q_0 + 1) = (0 - 4) \bmod 5 = 1, ...,$$

and

$$t_{0,0,15} = \left( \mathbf{1}\{x_{0,0} \neq 15\} - \left( eq_{0,0} \right)_0^A \right) mod (q_0 + 1) = (1 - 4) \bmod 5 = 2.$$

By invoking the OT protocol, P1 can select and obtain one integer $t_{i,j,y_{i,j}} = \left( \mathbf{1}\{x_{i,j} \neq y_{i,j}\} - \left( eq_{i,j} \right)_0^A \right) mod (q_i + 1)$ from the group of $M_i$ integers. The selected integer $t_{i,j,y_{i,j}}$ can be denoted as an arithmetic share $\left\langle \text{eq}_{i,j} \right\rangle_1^A$ that belongs to P1, since $(\left\langle \text{eq}_{i,j} \right\rangle_0^A + \left\langle \text{eq}_{i,j} \right\rangle_1^A) \bmod (q_i + 1) = 0$ when $x_{i,j} = y_{i,j}$, $(\left\langle \text{eq}_{i,j} \right\rangle_0^A + \left\langle \text{eq}_{i,j} \right\rangle_1^A) \bmod (q_i + 1) \neq 0$ when $x_{i,j} \neq y_{i,j}$. As such, the secure MPC can determine whether $x_{i,j} = y_{i,j}$ by computing $(\left\langle \text{eq}_{i,j} \right\rangle_0^A + \left\langle \text{eq}_{i,j} \right\rangle_1^A) \bmod (q_i + 1)$.

As an example, the section of $y_0$ that corresponds to $x_{0,0} = 0110$ is $y_{0,0} = 0110$. Based on $y_{0,0}$, P1 selects and obtains the integer $t_{0,0,6}$ from the 16 integers $t_{0,0,0}$ to $t_{0,0,15}$. Therefore, $\left\langle \text{eq}_{0,0} \right\rangle_1^A = t_{0,0,6} = 1$. Since $(\left\langle \text{eq}_{0,0} \right\rangle_0^A + \left\langle \text{eq}_{i,j} \right\rangle_1^B) \bmod 5 = (4 + 1) \bmod 5 = 0$, it indicates that $x_{0,0} = y_{0,0}$.

At 306, P0 can output $(\left\langle eq_{i,0} \right\rangle_0^A + \cdots + \left\langle eq_{i,q_i-1} \right\rangle_0^A) \bmod (q_i + 1)$. P1 can output $(\left\langle eq_{i,0} \right\rangle_1^A + \cdots + \left\langle eq_{i,q_i-1} \right\rangle_1^A) \bmod (q_i + 1)$. When $x_0 = y_0$, the sum of the two outputs is a multiple of $(q_i + 1)$. When $x_0 \neq y_0$, the sum of the two outputs is not a multiple of $(q_i + 1)$. As one example, as shown in FIG. 3, in the first iteration of the process 300, P0's input $x_0$, which is 16 bits in length, is compressed into the output of one integer $(\left\langle eq_{i,0} \right\rangle_0^A + \cdots + \left\langle eq_{i,q_i-1} \right\rangle_0^A) \bmod (q_i + 1)$, which can be represented by 3 bits (e.g., 2=010). P1's input $y_0$, which is 16 bits in length, is compressed into the output of one integer $(\left\langle eq_{i,0} \right\rangle_1^A + \cdots + \left\langle eq_{i,q_i-1} \right\rangle_1^A) \bmod (q_i + 1)$, which can also be represented by 3 bits (e.g., 4=100).

The process 300 proceeds to a second iteration, where P0 and P1 set $i = 1$. The output of the first iteration can be the input of the second iteration. The input from P0 is $x_i = (\left\langle eq_{i-1,0} \right\rangle_0^A + \cdots + \left\langle eq_{i-1,q_i-1} \right\rangle_0^A) \bmod (q_i + 1)$.

The input from P1 is $y_i = [-(\left\langle eq_{i,0} \right\rangle_1^A + \cdots + \left\langle eq_{i,q_i-1} \right\rangle_1^A)] \bmod (q_i + 1)$. The secure MPC system can determine whether $x_0 = y_0$ by determining whether $x_1 = y_1$.

In some implementations, the following iterations (including the second iteration) can be performed in the same approach as the first iteration, where P0 generate a random integer, generates a group of integers based on the random integer, and sends a selected integer from the group of integers based on OT protocol. In some implementations, some of the following iterations can be performed in the approach as shown in process 100.

At 308, P0 can partition its input $x_i$ into a number of sections $x_{i,j}$, such that $x_i = x_{i,q_i-1}\|x_{i,q_i-2}\|...\|x_{i,1}\|x_{i,0}$. The length of the input $x_i$ is $l_i$ bits. The length of each section is $m_i$ bits, so that the input is partitioned into $q_i = \lceil \frac{l_i}{m_i} \rceil$ sections. As an example, as shown in FIG. 3, P0 inputs $x_i = x_1 = 010$, which is 3 bits in length. $x_1$ can be viewed as a single section $x_1 = x_{1,0}$. That is, $l_i = 3$, $m_i = 3$, and $q_i = 1$.

Similarly, P1 partitions its input $y_i$ into a number of sections $y_{i,j}$, such that $y_i = y_{i,q_i-1}\|y_{i,q_i-2}\|...\|y_{i,0}$. The length of the input $y_i$ is $l_i$ bits. The length of each section is $m_i$ bits, so that the input is partitioned into $q_i = \lceil \frac{l_i}{m_i} \rceil$ sections. As an example, as shown in FIG. 3, P1 inputs $y_i = y_1 = 001$, which is 3 bits in length. $y_1$ can be viewed as a single section $y_1 = y_{1,0}$. That is, $l_i = 3$, $m_i = 3$, and $q_i = 1$.

At 310, for each section $x_{i,j}$ ($j = \{0, 1, ..., q_i - 1\}$), P0 can generate a random bit $\left\langle \text{eq}_{i,j} \right\rangle_0^B \leftarrow \{0,1\}$. The random bit includes one bit of either 0 or 1. The random bit can be regarded as a Boolean share that belongs to P0. Based on the random integer $\left\langle \text{eq}_{i,j} \right\rangle_0^B$, P0 can generate a group of $M_i$ bits, each denoted as $t_{i,j,k}$, where $M_i = 2^{m_i}$, and $k = \{0, 1, ..., M_i - 1\}$. Each bit $t_{i,j,k}$ can be generated as $t_{i,j,k} = \left\langle \text{eq}_{i,j} \right\rangle_0^B \oplus \mathbf{1}\{x_{i,j} = k\}$.

As an example, for the section $x_{1,0} = 010$, P0 generates a random bit 0 as $\left\langle \text{eq}_{1,0} \right\rangle_0^B$. P0 then generates a group of 8 bit, $t_{1,0,0}$ to $t_{1,0,7}$, where:

$$t_{1,0,0} = \left\langle \mathrm{eq}_{1,0} \right\rangle_0^B \oplus \mathbf{1}\{x_{1,0} = 0\} = 0 \oplus 0 = 0,$$

$$t_{1,0,1} = \left\langle \mathrm{eq}_{1,0} \right\rangle_0^B \oplus \mathbf{1}\{x_{1,0} = 1\} = 0 \oplus 0 = 0,$$

$$t_{1,0,2} = \left\langle \mathrm{eq}_{1,0} \right\rangle_0^B \oplus \mathbf{1}\{x_{1,0} = 2\} = 0 \oplus 1 = 1, \ldots,$$

and

$$t_{1,0,7} = \left\langle \mathrm{eq}_{1,0} \right\rangle_0^B \oplus \mathbf{1}\{x_{0,0} = 7\} = 0 \oplus 0 = 0$$

By invoking the OT protocol, P1 can select and obtain one bit $t_{i,j,y_{i,j}} = \left\langle \mathrm{eq}_{i,j} \right\rangle_0^B \oplus \mathbf{1}\{x_{i,j} = y_{i,j}\}$ from the group of $M_i$ bits. The selected bit $t_{i,j,y_{i,j}}$ can be denoted as a Boolean share $\left\langle \mathrm{eq}_{i,j} \right\rangle_1^B$ that belongs to P1, since $\left\langle \mathrm{eq}_{i,j} \right\rangle_0^B \oplus \left\langle \mathrm{eq}_{i,j} \right\rangle_1^B = 1$ when $x_{i,j} = y_{i,j}$, and $\left\langle \mathrm{eq}_{i,j} \right\rangle_0^B \oplus \left\langle \mathrm{eq}_{i,j} \right\rangle_1^B = 0$ when $x_{i,j} \neq y_{i,j}$. As such, the MPC can determine whether $x_{i,j} = y_{i,j}$ by computing $\left\langle \mathrm{eq}_{i,j} \right\rangle_0^B \oplus \left\langle \mathrm{eq}_{i,j} \right\rangle_1^B$ .

At 312, for the second iteration where $i = 1$, P0 outputs $q_i$ bits, each bit $\left\langle \mathrm{eq}_{i,j} \right\rangle_0^B$ is a first secret share of an indicator that indicates whether the section $x_{i,j}$ equals the section $y_{i,j}$. P1 can output $q_i$ bits, each bit $\left\langle \mathrm{eq}_{i,j} \right\rangle_1^B$ is a second secret share of the indicator. In this way, the input $x_i$ and $y_i$ are each further compressed to a value in binary form having a shorter length.

The process 300 can include multiple rounds of iteration, until the initial input $x_0$ and $y_0$ are each compressed to a single bit. In the last iteration, P0 and P1 each output a single bit.

At 314, by performing an XOR operation on the single-bit output of the last iteration, the secure MPC can determine whether $a = b$. In this way, through the iterative approach by invoking OT protocol, the secure MPC system can obtain the result of equality testing.

As an example, the section of $y_0$ that corresponds to $x_{1,0} = 010$ is $y_{1,0} = 001$. Based on $y_{1,0}$, P1 selects and obtains the bit $t_{1,0,1}$ from the 8 bits $t_{1,0,0}$ to $t_{1,0,7}$. Therefore, $\left\langle \mathrm{eq}_{1,0} \right\rangle_1^B = t_{1,0,1} = 0$. Since $\left\langle \mathrm{eq}_{1,0} \right\rangle_0^B \oplus \left\langle \mathrm{eq}_{1,0} \right\rangle_1^B = 0 \oplus 0 = 0$ , it indicates that $x_{1,0} \neq y_{1,0}$, which is equivalent to $x_0 \neq y_0$, which is equivalent to $a \neq b$.

It should be noted that the example process 300 is for illustration purposes. The initial input $x_0$ and $y_0$ can have any suitable length in bits, the input of each iteration can be partitioned into sections of any suitable length in bits, and the process can include any suitable number of rounds of iteration. For example, the initial input $x_0$ and $y_0$ can each include 64 bits, and are each partitioned into 16 sections (each section has a length of 4 bits). By implementing the process 300, the first iteration can compress $x_0$ and $y_0$ into $x_1$ and $y_1$, $x_1$ and $y_1$ each having a length of 5 bits. The second iteration can implement the process 100, and compress $x_1$ and $y_1$ into $x_2$ and $y_2$, $x_2$ and $y_2$ each having a length of 3 bits. The third (last) iteration can implement the process 100, and compress $x_2$ and $y_2$ into a single bit. By performing an XOR operation on the two single bits, the secure MPC system can determine whether $a = b$.

Below is an example algorithm for process 300.

$P_0$ locally computes $\langle d \rangle_0^A = \langle a \rangle_0^A - \langle b \rangle_0^A$, $P_1$ locally computes $\langle d \rangle_1^A = \langle a \rangle_1^A - \langle b \rangle_1^A$.

$P_0$ sets $x_0 = \langle d \rangle_0^A$, $P_1$ sets $y_0 = -\langle d \rangle_1^A$.

$P_0$ and $P_1$ set $i = 0$.

**do**

    $P_0$ parses its input as $x_i = x_{i,q_i-1} \| x_{i,q_i-2} \| \ldots \| x_{i,0}$, and $P_1$ parses its input as $y_i = y_{i,q_i-1} \| y_{i,q_i-2} \| \ldots \| y_{i,0}$, where $x_{i,j}, y_{i,j} \in \{0,1\}^{m_i}$, $q_i = \lceil \frac{l_i}{m_i} \rceil$, the bit lengths of $x_i$ and $y_i$ are equal, denoted as $l_i$.

    Let $M_i = 2^{m_i}$

    **for** $j = \{0,1,\ldots,q_i - 1\}$ **do**

        $P_0$ samples $\left\langle eq_{i,j} \right\rangle_0^A \leftarrow \{0,1,\ldots,q_i\}$

        **for** $k = \{0,1,\ldots,M_i - 1\}$ **do**

            $P_0$ sets $t_{i,j,k} = \left( 1\{x_{i,j} \neq k\} - \left\langle eq_{i,j} \right\rangle_0^A \right) \bmod (q_i + 1)$

        **end for**

        $P_0$ and $P_1$ invoke an instance of 1 out of $M_i$ OT, where $P_0$ is the sender with inputs $\{t_{i,j,k}\}_k$ and $P_1$ is the receiver with input $y_{i,j}$. $P_1$ sets its output as $\left\langle eq_{i,j} \right\rangle_1^A$.

    **end for**

    $P_0$ sets $x_{i+1} = (\left\langle eq_{i,0} \right\rangle_0^A + \cdots + \left\langle eq_{i,q_i-1} \right\rangle_0^A) \bmod (q_i + 1)$

    $P_1$ sets $y_{i+1} = [-(\left\langle eq_{i,0} \right\rangle_1^A + \cdots + \left\langle eq_{i,q_i-1} \right\rangle_1^A)] \bmod (q_i + 1)$

    $P_0$ and $P_1$ compute $i = i + 1$.

**while** $q_{i-1} > T$, $T$ is threshold value

**do**

$P_0$ parses its input as $x_i = x_{i,q_i-1}\|x_{i,q_i-2}\|\ldots\|x_{i,0}$, and $P_1$ parses its input as $y_i = y_{i,q_i-1}\|y_{i,q_i-2}\|\ldots\|y_{i,0}$, where $x_{i,j}, y_{i,j} \in \{0,1\}^{m_i}$, $q_i = \lceil\frac{l_i}{m_i}\rceil$, the bit lengths of $x_i$ and $y_i$ are equal, denoted as $l_i$.

Let $M_i = 2^{m_i}$

**for** $j = \{0,1,\ldots,q_i - 1\}$ **do**

$P_0$ samples $\left\langle eq_{i,j}\right\rangle_0^B \leftarrow \{0,1\}$

**for** $k = \{0,1,\ldots,M_i - 1\}$ **do**

**if** $q_i > 1$

$P_0$ sets $t_{i,j,k} = \left\langle eq_{i,j}\right\rangle_0^B \oplus \mathbf{1}\{x_{i,j} \neq k\}$

**else**

$P_0$ sets $t_{i,j,k} = \left\langle eq_{i,j}\right\rangle_0^B \oplus \mathbf{1}\{x_{i,j} = k\}$

**end if**

**end for**

$P_0$ and $P_1$ invoke an instance of 1 out of $M_i$ OT, where $P_0$ is the sender with inputs $\{t_{i,j,k}\}_k$ and $P_1$ is the receiver with input $y_{i,j}$. $P_1$ sets its output as $\left\langle eq_{i,j}\right\rangle_1^B$.

**end for**

$P_0$ sets $x_{i+1} = \left\langle eq_{i,0}\right\rangle_0^B\|\ldots\|\left\langle eq_{i,q_i-1}\right\rangle_0^B$

$P_1$ sets $y_{i+1} = \left\langle eq_{i,0}\right\rangle_1^B\|\ldots\|\left\langle eq_{i,q_i-1}\right\rangle_1^B$

$P_0$ and $P_1$ compute $i = i + 1$.

**while** $q_{i-1} > 1$

$P_0$ and $P_1$ set their output as $\left\langle eq_{i-1,0}\right\rangle_0^B$ and $\left\langle eq_{i-1,0}\right\rangle_1^B$, respectively.

In some implementations, the last round iteration of process 300 can be performed based on AND operation, instead of based on oblivious transfer (OT) protocol. In the last iteration where PO's input is $x_n = \left\langle eq_{n-1,q_{n-1}-1}\right\rangle_0^B \| \ldots \| \left\langle eq_{n-1,0}\right\rangle_0^B$ and PO's input is $y_n = \left\langle eq_{n-1,q_{n-1}-1}\right\rangle_1^B \| \ldots \| \left\langle eq_{n-1,0}\right\rangle_1^B$, the secure MPC can determine whether $x_n = y_n$ by computing $\mathbf{1}\left\{\left\langle eq_{n-1,q_{n-1}-1}\right\rangle_0^B = \left\langle eq_{n-1,q_{n-1}-1}\right\rangle_1^B\right\} AND \ldots AND \, \mathbf{1}\left\{\left\langle eq_{n-1,q_0-1}\right\rangle_0^B = \left\langle eq_{n-1,q_0-1}\right\rangle_1^B\right\}$ . If the result of the AND operations is 1, $x_n = y_n$. If the result of the AND operations is 0, $x_n \neq y_n$.

As an example shown in FIG. 3, PO's input of the last iteration is $x_1 = 010$, P1's input of the last iteration is $y_1 = 001$. P1 can locally compute $y_1' = y_1 \oplus 111 = 110$ . In the first round of AND operation, the secure MPC can perform an XOR operation on the first bit of $x_1$ and the first bit of $y_1'$, an XOR operation on the second bit of $x_1$ and the second bit of $y_1'$, and an AND operation on the results of the two XOR operations, such that $(0 \oplus 1) AND (1 \oplus 1) = 0 AND 1 = 0$. The result can be an input of the second round of AND operation. Then, the secure MPC can perform an XOR operation on the third bit of

$x_1$ and the third bit of $y_1'$ , and an AND operation on the results of the AND operation of the last round, such that $(0 \oplus 0)$ *AND* 0 = 0. If the result of the last AND operation is 0, it means $x_1 \neq y_1$, which is equivalent to $a \neq b$. If the result of the last AND operation is 1, it means $x_1 = y_1$, which is equivalent to a = b.

Below is an example algorithm for process 300 where the last iteration performs equality testing based on AND operations.

---

$P_0$ locally computes $\langle d \rangle_0^A = \langle a \rangle_0^A - \langle b \rangle_0^A$, $P_1$ locally computes $\langle d \rangle_1^A = \langle a \rangle_1^A - \langle b \rangle_1^A$.

$P_0$ sets $x_0 = \langle d \rangle_0^A$, $P_1$ sets $y_0 = -\langle d \rangle_1^A$.

$P_0$ and $P_1$ set $i = 0$.

**do**

$\quad P_0$ parses its input as $x_i = x_{i,q_i-1} \| x_{i,q_i-2} \| \ldots \| x_{i,0}$, and $P_1$ parses its input as $y_i = y_{i,q_i-1} \| y_{i,q_i-2} \| \ldots \| y_{i,0}$, where $x_{i,j}, y_{i,j} \in \{0,1\}^{m_i}$, $q_i = \lceil \frac{l_i}{m_i} \rceil$, the bit lengths of $x_i$ and $y_i$ are equal, denoted as $l_i$.

$\quad$ Let $M_i = 2^{m_i}$

$\quad$ **for** $j = \{0,1,\ldots,q_i - 1\}$ **do**

$\quad\quad P_0$ samples $\left( eq_{i,j} \right)_0^A \leftarrow \{0,1,\ldots,q_i + 1\}$

$\quad\quad$ **for** $k = \{0,1,\ldots,M_i - 1\}$ **do**

$\quad\quad\quad$ **if** $q_i > T$.

$\quad\quad\quad\quad P_0$ sets $t_{i,j,k} = \left( 1\{x_{i,j} \neq k\} - \left( eq_{i,j} \right)_0^A \right) mod \, (q_i + 1)$

$\quad\quad\quad$ **else**

$\quad\quad\quad\quad P_0$ sets $t_{i,j,k} = \left( 1\{x_{i,j} = k\} - \left( eq_{i,j} \right)_0^A \right) mod \, (q_i + 1)$

$\quad\quad\quad$ **end if**

$\quad\quad$ **end for**

$\quad P_0$ and $P_1$ invoke an instance of 1 out of $M_i$ OT, where $P_0$ is the sender with inputs $\{t_{i,j,k}\}_k$ and $P_1$ is the receiver with input $y_{i,j}$. $P_1$ sets its output as $\left( eq_{i,j} \right)_1^A$.

$\quad$ **end for**

---

$$P_0 \text{ sets } x_{i+1} = (\langle eq_{i,0}\rangle_0^A + \cdots + \langle eq_{i,q_i-1}\rangle_0^A)\, mod\,(q_i + 1)$$

$$P_1 \text{ sets } y_{i+1} = [-\left(\langle eq_{i,0}\rangle_1^A + \cdots + \langle eq_{i,q_i-1}\rangle_1^A\right)]\, mod\,(q_i + 1)$$

$P_0$ and $P_1$ compute $i = i + 1$.

**while** $q_{i-1} > T$, $T$ is threshold value

$P_0$ parses its input as $x_i = \langle eq_{i,0}\rangle_0^B || \dots ||\langle eq_{i,q_i-1}\rangle_0^B$, and $P_1$ parses its input as $y_i = $

$\langle eq_{i,0}\rangle_1^B || \dots ||\langle eq_{i,q_i-1}\rangle_1^B$. $q_i$ is the bit length of $x_i$ and $y_i$.

**for** $k = \{1, \dots, \lceil log(q_i)\rceil\}$ **do**

    **for** $j = \{0, \dots, q_i/2^k - 1)\}$ **do**

        for $b \in \{0,1\}$, $P_b$ invokes **AND** with inputs $\langle eq_{k-1,2j}\rangle_b^B$ and $\langle eq_{k-1,2j+1}\rangle_b^B$ to learn output

        $\langle eq_{k,j}\rangle_b^B$.

    **end for**

**end for**

$P_0$ and $P_1$ set their output as $\langle eq_{\lceil log(q_i)\rceil,0}\rangle_0^B$ and $\langle eq_{\lceil log(q_i)\rceil,0}\rangle_1^B$, respectively.

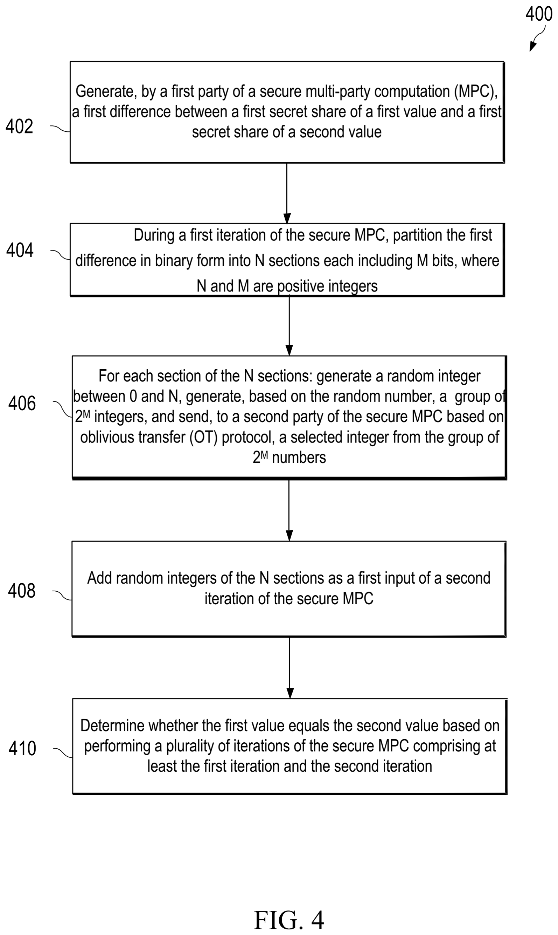

FIG. 4 illustrates a flow chart of the example method 400 of performing equality testing as shown in FIG. 3. The operations shown in method 400 may not be exhaustive and that other operations can be performed as well before, after, or in between any of the illustrated operations. Further, some of the operations may be performed simultaneously, or in a different order than shown in FIG. 4. In some implementations, some of the operations may be performed by a computer, or multiple computers based on secure MPC.

At 402, a first party (e.g., P0 of FIG. 3) of a secure multi-party computation (MPC) generates a first difference (e.g., $x_0$ of FIG. 3) between a first secret share (e.g., arithmetic share $\langle a\rangle_0^A$) of a first value (e.g., private input $a$) and a first secret share (e.g., arithmetic share $\langle b\rangle_0^A$) of a second value (e.g., private input $b$). The second party (e.g., P1 of FIG. 3) of the secure MPC generates a second difference (e.g., $y_0$ of FIG. 3) between a second secret share (e.g., arithmetic share $\langle a\rangle_1^A$) of the first value and a second secret share (e.g., arithmetic share $\langle b\rangle_1^A$) of the second value.

At 404, during a first iteration of the secure MPC, the first party partitions the first difference into N sections (e.g., $x_0 = x_{0,3}\|x_{0,2}\|x_{0,1}\|x_{0,0}$) each including M bits, where N and M are positive integers. The second party partitions the second difference into N sections (e.g., $y_0 = y_{0,3}\|y_{0,2}\|y_{0,1}\|y_{0,0}$) each including M bits.

At 406, for each section of the N sections, the first party generates a random integer (e.g., $\langle eq_{0,j}\rangle_0^A$ of FIG. 3), generates a group of $2^M$ integers (e.g., $t_{0,j,o}$ to $t_{0,j,15}$ of FIG. 3) based on the random integer, and sends, to the second party and based on oblivious transfer (OT) protocol, a selected integer (e.g., $t_{0,j,y_{0,j}}$, also denoted as $\langle eq_{0,j}\rangle_1^A$ in FIG. 3) from the group of $2^M$ integers.

In some implementations, the group of $2^M$ integers are generated by generating an $m^{th}$ integer, ($m=0, 1, 2, \dots, 2^M-1$), of the group of $2^M$ integers as $(\mathbf{1}\{x_{i,j} \neq m\} - r)\, mod\,(N + 1)$, where $x_{i,j}$ is a target section of the first difference, and $r$ is the random integer (e.g., $\langle eq_{0,j}\rangle_0^A$ of FIG. 3).

Further, the selected integer is the $Q^{th}$ integer of the group of $2^M$ integers, where Q equals the value of a target section (e.g., $y_{0,j}$ of FIG. 3) of the second difference that corresponds to the target section of the first difference. As such, a sum of the random integer and the selected integer is a multiple of (N+1) when the target section of the first difference and the target section of the second difference are equal; and the sum of the random integer and the selected integer is not a multiple of (N+1) when the value of the section of the first difference and the value of the corresponding section of the second difference are not equal.

At 408, the first party adds random integers of the N sections as a first input (e.g., $x_1$ of FIG. 3) of a second iteration of the secure MPC. The second party adds selected bits of the N sections as a second input (e.g., $y_1$ of FIG. 3) of the second iteration.

In some implementations, during the second iteration, the first party partitions the first input into R sections each including M bits, and the second party partitions the second input into R sections each including M bits, where R is a positive integer. For each section of the R sections, the first party generates a second random bit (e.g., $\left(eq_{1,0}\right)_0^B$ of FIG. 3), generates a second group of $2^M$ bits (e.g., $t_{1,0,0}$ to $t_{1,0,15}$ of FIG. 3) based on the second random bit, and sends, to the second party based on the OT protocol, a second selected bit (e.g., $t_{1,0,y_{1,0}}$, also denoted as $\left(eq_{1,0}\right)_1^B$ of FIG. 3) from the second group of $2^M$ bits.

At 410, the secure MPC determines whether the first value equals the second value based on results of a plurality of iterations of the secure MPC. The plurality of iterations includes at least the first iteration and the second iteration.

In some implementations, the last iteration of the plurality of iterations is also performed based on OT protocol. During the last iteration, the first party generates a last random bit (e.g., $\left(eq_{1,0}\right)_0^B$ of FIG. 3), generates a last group of $2^K$ bits (e.g., e.g., $t_{1,0,0}$ to $t_{1,0,7}$ of FIG. 3) based on the last random bit, and sends, to the second party based on the OT protocol, a last selected bit (e.g., $t_{1,0,y_{1,0}}$, also denoted as $\left(eq_{1,0}\right)_1^B$ of FIG. 3) from the last group of $2^K$ bits. The secure MPC determines whether the first value and the second value are equal by performing an XOR operation on the last random bit and the last selected bit.

In some implementations, the last iteration of the plurality of iterations is performed based on AND operations. The secure MPC determines whether the first value and the second value are equal by performing one or more AND operations on a first input and a second input of the last iteration.

In some implementations, the MPC can perform equality testing by invoking equality testing protocols (e.g., $\prod_{eq}^{N,B}(a,b)$ and $\prod_{eq}^{N,A}(a,b)$. The equality testing protocols can include offline computation (also referred to as local computation) by the parties, so that the number of communication rounds between the parties can be further reduced.

The algorithm below provides a Vector Oblivious Shift Evaluation (VOSE) protocol $\prod_{vose}^{N,B}(\vec{T'})$ using Boolean operation.

**Input:** $P_0$ inputs a vector $\overrightarrow{T'} \in \mathbb{Z}_2^\mathbb{N}$.

**Output:** $P_0$ receives a share vector $\overrightarrow{T_0}$; $P_1$ receives an offset $\epsilon_1 \in [N]$ and a share vector $\overrightarrow{T_1}$,

where $\overrightarrow{T_0} \oplus \overrightarrow{T_1} = shift(\overrightarrow{T'}, \epsilon_1)$

1. $P_0$ and $P_1$ invoke $N-1$ out of $N$ random oblivious transfer.

    a. $P_0$ receives $\{m_i | i \in [N], m_i \in \mathbb{Z}_2^\mathbb{N}\}$

    b. $P_1$ receives $\epsilon_1 \in [N]$ and $\{m_i | i \in [N] \text{except } \epsilon_1, m_i \in \mathbb{Z}_2^\mathbb{N}\}$

2. $P_0$ and $P_1$ generate the matrix $M \in \{0, 1\}^{N \times N}$ by using $m_i$ as the column vectors for $i \in [N]$.

3. $P_0$ and $P_1$ right cycle shift the $i^{th}$ row of $M$ by $i$ positions locally for $i \in [N]$.

4. $P_0$ computes $v_i = \bigoplus_{j=0}^{N-1} m_{i,j}$ and $u_i = \bigoplus_{j=0}^{N-1} m_{j,i}$, for $i \in [N]$, and denotes $\overrightarrow{V} = \{v_0, \ldots, v_{N-1}\}$ and $\overrightarrow{U} = \{u_0, \ldots, u_{N-1}\}$.

5. $P_1$ computes $w_i = v_i \oplus u_{\epsilon_1 + i}$, and denotes $\overrightarrow{W} = \{w_0, \ldots, w_{N-1}\}$.

6. $P_0$ sends $\overrightarrow{S'} = \overrightarrow{T'} \oplus \overrightarrow{U}$ to $P_1$ and sets $\overrightarrow{T_0} = \overrightarrow{V}$.

7. $P_1$ computes $\overrightarrow{T_1} = shift(\overrightarrow{S'}, \epsilon_1) \oplus \overrightarrow{W}$.

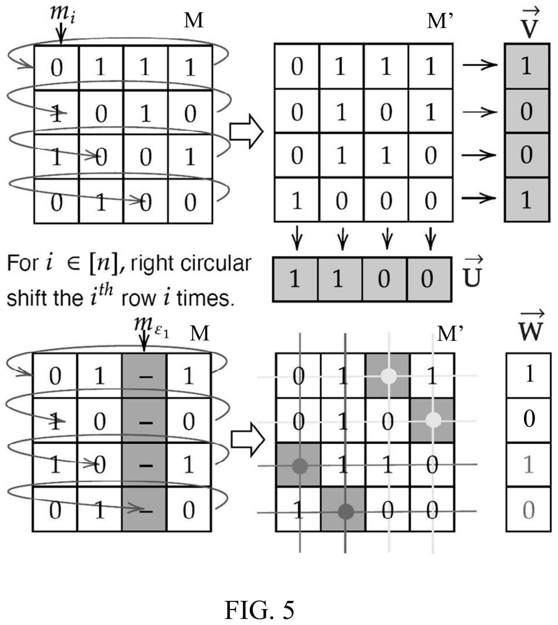

With reference to FIG. 5. by invoking the VOSE protocol ($\prod_{vose}^{N,B}(\overrightarrow{T'})$) using Boolean operation, at step 1-2 of the algorithm, the first party (P0) can generate a matrix $M = \{m_i | i \in [N], m_i \in \mathbb{Z}_2^\mathbb{N}\}$, which has N vectors ($m_j$), each vector has N elements, and each element is a bit (either 0 or 1). A second party (P1) can generate an integer $\varepsilon_1 \in [N]$ as an offset. Based on a N-1 out of N oblivious transfer, P1 can receive N-1 vectors of the N vectors, except the vector $m_{\varepsilon_1}$. Therefore, P0 obtains the complete matrix M, while P1 can obtain the matrix M except for the vector $m_{\varepsilon_1}$.

At step 3 of the algorithm, P0 and P1 right circular shift the $i^{th}$ row of matrix M by i times for $i \in [N]$, and denote the new matrix as M'. As shown in FIG. 5, P0 and P1 each right shifts row 0 by 0 time, right shifts row 1 by 1 time, right shifts row 2 by 2 times, and right shifts row 3 by 3 times.

At step 4 of the algorithm, $P_0$ computes $v_i = \sum_{j=0}^{N-1} m_{(i,j)} \mod 2$ and $u_i = \sum_{j=0}^{N-1} m_{(j,i)} \mod 2$ for $i \in [N]$, and generates the vector $\overrightarrow{V} = \{v_0 \ldots v_{N-1}\}$ and the vector $\overrightarrow{U} = \{u_0 \ldots u_{N-1}\}$. As shown in FIG. 5, the $i^{th}$ element in vector $\overrightarrow{V}$ is the XOR value of the N bits in the $i^{th}$ row of the matrix M, and the $i^{th}$ element in vector $\overrightarrow{U}$ is the XOR value of the N bits in the $i^{th}$ column of the matrix M.

At step 5 of the algorithm, $P_1$ computes $w_i = v_i \oplus u_{\varepsilon_1 + i}$, to generate the vector $\overrightarrow{W} = \{w_0 \ldots w_{N-1}\}$. As shown in FIG. 5, $w_0 = v_0 \oplus u_2$, $w_1 = v_1 \oplus u_3$, $w_2 = v_2 \oplus u_0$, and $w_3 = v_3 \oplus u_1$.

As such, P1 obtains the vector $\overrightarrow{W} = \{w_0 \ldots w_{N-1}\}$, while P0 obtains the vector $\overrightarrow{V} = \{v_0 \ldots v_{N-1}\}$ and the vector $\overrightarrow{U} = \{u_0 \ldots u_{N-1}\}$. The vectors $\overrightarrow{W}$, $\overrightarrow{V}$ and $\overrightarrow{U}$ satisfy $\overrightarrow{W} = shift(\overrightarrow{U}, \varepsilon_1) \oplus \overrightarrow{V}$.

At step 6 of the algorithm, $P_0$ sends $\overrightarrow{S'} = \overrightarrow{T'} \oplus \overrightarrow{U}$ to $P_1$ and sets $\overrightarrow{T_0} = \overrightarrow{V}$.

At step 7 of the algorithm, $P_1$ computes $\overrightarrow{T_1} = shift(\overrightarrow{S'}, \varepsilon_1) \oplus \overrightarrow{W}$.

As a result, $\overrightarrow{T_0} \oplus \overrightarrow{T_1} = shift(\overrightarrow{T'}, \varepsilon_1)$. In other words, by invoking the VOSE protocol based on Boolean operation, based on a vector $\overrightarrow{T'} \in \mathbb{Z}_2^\mathbb{N}$ from P0, P0 can receive a share vector $\overrightarrow{T_0}$, $P_1$ can receive an offset $\varepsilon_1 \in [N]$ and a share vector $\overrightarrow{T_1}$, where $\overrightarrow{T_0} \oplus \overrightarrow{T_1} = shift(\overrightarrow{T'}, \varepsilon_1)$.

An equality testing protocol $\prod_{eq}^{N,B}(a, b)$ can be built based on the VOSE protocol based on Boolean operation. The first party can input a first value (a) having n bits in length, and a second value (b) having n bits in length. By invoking the equality testing protocol $\prod_{eq}^{N,B}(a, b)$, the first party can receive a Boolean share of an indication bit ( $\langle 1\{a = b\}\rangle_0^B$ ) indicating whether $a = b$, and the first party can receive a Boolean share of the indication bit ( $\langle 1\{a = b\}\rangle_1^B$ ).

$\langle \mathbf{1}\{a = b\}\rangle_0^B \oplus \langle \mathbf{1}\{a = b\}\rangle_1^B = 1$ indicates that $a = b$, and $\langle \mathbf{1}\{a = b\}\rangle_0^B \oplus \langle \mathbf{1}\{a = b\}\rangle_1^B = 0$ indicates that $a \neq b$.

The algorithm below provides the equality testing protocol $\prod_{cq}^{N,B}(a, b)$, which invokes the VOSE protocol $\prod_{vose}^{N,B}(\vec{T'})$ using Boolean operation.

---

The parameter $N$ is defined as $N = 2^n$

**Input:** $P_0$ inputs $a \in \{0, 1\}^n$ and $P_1$ inputs $b \in \{0, 1\}^n$

**Output:** $P_0$, $P_1$ learn $\langle \mathbf{1}\{a = b\}\rangle_0^B$ and $\langle \mathbf{1}\{a = b\}\rangle_1^B$, respectively.

Offline

1. $P_0$ and $P_1$ pick $\epsilon_0 \leftarrow [N]$ and $\epsilon_1 \leftarrow [N]$, respectively.

2. $P_0$ generates a vector $\vec{T'}$, where $t'_{\epsilon_0} = 1$ and $t^i_{\epsilon_0} = 0$ for $i \in [N]$ except $\{\epsilon_0\}$

---

3. $P_0$ and $P_1$ invoke $\{\vec{T_0}, \vec{T_1}\} = \prod_{vose}^{N,B}(\vec{T'})$

Online

1. $P_0$ computes $w_0 = a + \epsilon_0$ and send it to $P_1$, while $P_1$ computes $w_1 = \epsilon_1 - b$ and send it to $P_0$

2. $P_0$ and $P_1$ compute $w = w_0 + w_1 = a - b + \epsilon_0 + \epsilon_1$, locally.

3. $P_0$ sets $\langle \mathbf{1}\{a = b\}\rangle_0^B = \langle t_w\rangle_0^B$ and $P_1$ sets $\langle \mathbf{1}\{a = b\}\rangle_1^B = \langle t_w\rangle_1^B$.

---

The equality testing protocol $\prod_{cq}^{N,B}(a, b)$ includes offline computation and online computation. At step 1 of the offline computation, P0 generates a random number $\varepsilon_0$ from 0 to N as an offset, P1 generates a random number $\varepsilon_1$ from 0 to N as an offset, where $N = 2^n$.

At step 2 of the offline computation, P0 generates a vector $\vec{T'}$ having N bits. Only the $\varepsilon_0^{th}$ bits of the N bits is 1, while all other bits are 0.

At step 3 of the offline computation, P0 and P1 invoke the VOSE protocol $\prod_{vose}^{N,B}(\vec{T'})$. P0 inputs the vector $\vec{T'}$, and P1 inputs the offset $\varepsilon_1$. As a result, P0 receives a share vector $\vec{T_0}$, P1 can receive a share vector $\vec{T_1}$, where $\vec{T_0} \oplus \vec{T_1} = shift(\vec{T'}, \varepsilon_1)$.

At step 1 of the online computation, $P_0$ computes $w_0 = a + \varepsilon_0$ and sends it to $P_1$. $P_1$ computes $w_1 = \varepsilon_1 - b$ and sends it to $P_0$.

At step 2 of the online computation, $P_0$ and $P_1$ compute $w = w_0 + w_1 = a - b + \varepsilon_0 + \varepsilon_1$ locally.

At step 3 of the online computation, $P_0$ sets $\langle \mathbf{1}\{a = b\}\rangle_0^B = \langle t_w\rangle_0^B$, which is the $w^{th}$ bit in the share vector $\vec{T_0}$. $P_1$ sets $\langle \mathbf{1}\{a = b\}\rangle_1^B = \langle t_w\rangle_1^B$, which is the $w^{th}$ bit in the share vector $\vec{T_1}$.

As such, by invoking the equality testing protocol $\prod_{cq}^{N,B}(a, b)$, P0 receives a Boolean share of the indication bit ($\langle \mathbf{1}\{a = b\}\rangle_0^B$), and P1 receives a Boolean share of the indication bit ($\langle \mathbf{1}\{a = b\}\rangle_1^B$).

The algorithm below provides a VOSE protocol $\prod_{vose}^{N,A}(\vec{T'})$ using Arithmetic operation.

---

**Input:** $P_0$ inputs a vector $\vec{T'} \in \mathbb{Z}_{\mathbb{p}}^{\mathbb{N}}$.

**Output:** $P_0$ receives a share vector $\vec{T_0}$; $P_1$ receives an offset $\epsilon_1 \in [N]$ and $\vec{T_1}$, where $\vec{T_0} + \vec{T_1} = shift(\vec{T'}, \epsilon_1)$

1. $P_0$ and $P_1$ invoke $N - 1$ out of $N$ random oblivious transfer.

   a. $P_0$ receives $\{m_i | i \in [N], m_i \in \mathbb{Z}_{\mathbb{p}}^{\mathbb{N}}\}$

   b. $P_1$ receives $\epsilon_1 \in [N]$ and $\{m_i | i \in [N] \ except \ \epsilon_1, m_i \in \mathbb{Z}_{\mathbb{p}}^{\mathbb{N}}\}$

2. $P_0$ and $P_1$ generate the matrix $M \in \{\mathbb{Z}_{\mathbb{p}}\}^{N \times N}$ by using $m_i$ as the column vectors for $i \in$

---

$[N]$.

3. $P_0$ and $P_1$ right cycle shift the $i^{th}$ row of $M$ by $i$ positions locally for $i \in [N]$.

4. $P_0$ computes $v_i = \sum_{j=0}^{N-1} m_{(i,j)} \mod p$ and $u_i = \sum_{j=0}^{N-1} m_{(j,i)} \mod p$ for $i \in [N]$, and denotes $\vec{V} = \{v_0, \ldots, v_{N-1}\}$ and $\vec{U} = \{u_0, \ldots, u_{N-1}\}$.

5. $P_1$ computes $w_i = v_i - u_{\epsilon_1+i} \mod p$, and denotes $\vec{W} = \{w_0, \ldots, w_{N-1}\}$.

6. $P_0$ sends $\vec{S'} = \vec{T'} + \vec{U}$ to $P_1$ and sets $\vec{T_0} = -\vec{V}$.

7. $P_1$ computes $\vec{T_1} = shift(\vec{S'}, \epsilon_1) + \vec{W}$.

---

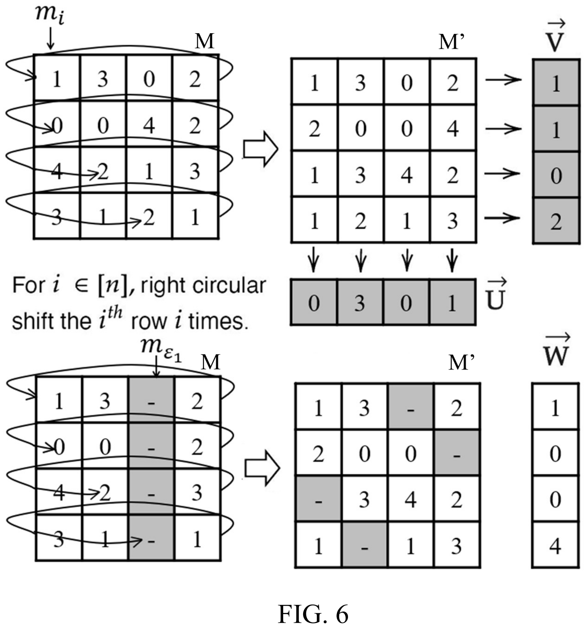

With reference to FIG. 6. by invoking the VOSE protocol $(\prod_{vose}^{N,A}(\vec{T'})$ using Arithmetic operation, at step 1-2 of the algorithm, the first party (P0) can generate a matrix

$$M = \{m_i | \ i \in [N], m_i \in \mathbb{Z}_{\mathbb{p}}^{\mathbb{N}}\}, \setminus$$

which has N vectors ($m_j$), each vector has N elements, and each element is an integer between 0 and P-1. A second party (P1) can generate an integer $\varepsilon_1 \in [N]$ as an offset. Based on a N-1 out of N oblivious transfer, P1 can receive N-1 vectors of the N vectors, except the vector $m_{\varepsilon_1}$. Therefore, P0 obtains the complete matrix M, while P1 can obtain the matrix M except for the vector $m_{\varepsilon_1}$.

At step 3 of the algorithm, P0 and P1 right circular shift the $i^{th}$ row of matrix M by i times for $i \in [N]$, and denote the new matrix as M'. As shown in FIG. 6, P0 and P1 each right shifts row 0 by 0 time, right shifts row 1 by 1 time, right shifts row 2 by 2 times, and right shifts row 3 by 3 times.

At step 4 of the algorithm, $P_0$ computes $v_i = \sum_{j=0}^{N-1} m_{(i,j)} \mod p$ and $u_i = \sum_{j=0}^{N-1} m_{(j,i)} \mod p$ for $i \in [N]$, and generates the vector $\vec{V} = \{v_0, \ldots, v_{N-1}\}$ and the vector $\vec{U} = \{u_0, \ldots, u_{N-1}\}$. As shown in FIG. 5, the $i^{th}$ element in vector $\vec{V}$ is the sum of the N integers in the $i^{th}$ row of the matrix M then mod by p, and the $i^{th}$ element in vector $\vec{U}$ is the sum of the N integers in the $i^{th}$ column of the matrix M then mod by p.

At step 5 of the algorithm, $P_1$ computes $w_i = v_i - u_{\varepsilon_1+i} \mod p$, to generate the vector $\vec{W} = \{w_0, \ldots, w_{N-1}\}$. As shown in FIG. 5, $w_0 = (v_0 - u_2) \mod 5$, $w_1 = (v_1 - u_3) \mod 5$, $w_2 = (v_2 - u_0) \mod 5$, and $w_3 = (v_3 - u_1) \mod 5$.

As such, P1 obtains the vector $\vec{W} = \{w_0, \ldots, w_{N-1}\}$, while P0 obtains the vector $\vec{V} = \{v_0, \ldots, v_{N-1}\}$ and the vector $\vec{U} = \{u_0, \ldots, u_{N-1}\}$. The vectors $\vec{W}$, $\vec{V}$ and $\vec{U}$ satisfy $\vec{W} = shift(\vec{U}, \varepsilon_1) - \vec{V}$.

At step 6 of the algorithm, $P_0$ sends $\vec{S'} = \vec{T'} + \vec{U}$ to $P_1$ and sets $\vec{T_0} = -\vec{V}$.

At step 7 of the algorithm, $P_1$ computes $\vec{T_1} = shift(\vec{S'}, \varepsilon_1) + \vec{W}$.

As a result, $\vec{T_0} + \vec{T_1} = shift(\vec{T'}, \varepsilon_1)$. In other words, by invoking the VOSE protocol based on Arithmetic operation, based on a vector $\vec{T'} \in \mathbb{Z}_P^N$ from P0, P0 can receive a share vector $\vec{T_0}$, $P_1$ can receive an offset $\varepsilon_1 \in [N]$ and a share vector $\vec{T_1}$, where $\vec{T_0} + \vec{T_1} = shift(\vec{T'}, \varepsilon_1)$.

An equality testing protocol $\prod_{cq}^{N,A}(a,b)$ can be built based on the VOSE protocol based on Arithmetic operations. The first party can input a first value (a) having n bits in length, and a second value (b) having n bits in length. By invoking the equality testing protocol $\prod_{cq}^{N,A}(a,b)$, the first party can receive an arithmetic share of an indication bit ( $\langle \mathbf{1}\{a=b\}\rangle_0^A$ ) indicating whether $a = b$, and the second party can receive an arithmetic share of the indication bit ( $\langle \mathbf{1}\{a=b\}\rangle_1^A$ ). $\langle \mathbf{1}\{a=b\}\rangle_0^A + \langle \mathbf{1}\{a=b\}\rangle_1^A = 1$ indicates that $a = b$, and $\langle \mathbf{1}\{a=b\}\rangle_0^B \oplus \langle \mathbf{1}\{a=b\}\rangle_1^B \neq 0$ indicates that $a \neq b$.

The algorithm below provides the equality testing protocol $\prod_{cq}^{N,A}(a,b)$, which invokes the VOSE protocol $\prod_{vose}^{N,A}(\vec{T'})$ using Arithmetic operations.

---

The parameter $N$ is defined as $N = 2^n$

**Input:** $P_0$ inputs $a \in \{0,1\}^n$ and $P_1$ inputs $b \in \{0,1\}^n$

**Output:** $P_0$, $P_1$ learn $\langle 1\{a=b\}\rangle_0^A$ and $\langle 1\{a=b\}\rangle_1^A$, respectively.

<u>Offline</u>

1.  $P_0$ and $P_1$ pick $\epsilon_0 \leftarrow [N]$ and $\epsilon_1 \leftarrow [N]$, respectively.

2.  $P_0$ generates a vector $\vec{T'}$, where $t'_{\epsilon_0} = 1$ and $t^i_{\epsilon_0} = 0$ for $i \in [N] \setminus \{\epsilon_0\}$

3.  $P_0$ and $P_1$ invoke $\{\vec{T_0}, \vec{T_1}\} = \prod_{vose}^{N,A}(\vec{T'})$

<u>Online</u>

1.  $P_0$ computes $w_0 = a + \epsilon_0$ and send it to $P_1$, while $P_1$ computes $w_1 = \epsilon_1 - b$ and send it to $P_0$

2.  $P_0$ and $P_1$ compute $w = w_0 + w_1$, locally.

3.  $P_0$ sets $\langle 1\{a=b\}\rangle_0^A = \langle t_w\rangle_0^A$ and $P_1$ sets $\langle 1\{a=b\}\rangle_1^A = \langle t_w\rangle_1^A$.

---

The equality testing protocol $\prod_{cq}^{N,A}(a,b)$ includes offline computation and online computation. At step 1 of the offline computation, P0 generates a random number $\varepsilon_0$ from 0 to N as an offset, P1 generates a random number $\varepsilon_1$ from 0 to N as an offset, where $N = 2^n$.

At step 2 of the offline computation, P0 generates a vector $\vec{T}$ having N bits. Only the $\varepsilon_0^{th}$ bits of the N bits is 1, while all other bits are 0.

At step 3 of the offline computation, P0 and P1 invoke the VOSE protocol $\prod_{vose}^{N,A}(\vec{T'})$. P0 inputs the vector $\vec{T}$, and P1 inputs the offset $\varepsilon_1$. As a result, P0 receives a share vector $\vec{T_0}$, $P_1$ can receive a share vector $\vec{T_1}$, where $\vec{T_0} + \vec{T_1} = shift(\vec{T}, \varepsilon_1)$

At step 1 of the online computation, $P_0$ computes $w_0 = a + \varepsilon_0$ and send it to $P_1$, and $P_1$ computes $w_1 = \varepsilon_1 - b$ and send it to $P_0$.

At step 2 of the online computation, $P_0$ and $P_1$ compute $w = w_0 + w_1 = a - b + \varepsilon_0 + \varepsilon_1$ locally.

At step 3 of the online computation, $P_0$ sets $\langle \mathbf{1}\{a=b\}\rangle_0^A = \langle t_w\rangle_0^A$, which is the $w^{th}$ integer in the share vector $\vec{T_0}$. $P_1$ sets $\langle \mathbf{1}\{a=b\}\rangle_1^A = \langle t_w\rangle_1^A$, which is the $w^{th}$ integer in the share vector $\vec{T_1}$.

As such, by invoking the equality testing protocol $\prod_{cq}^{N,A}(a,b)$, P0 receives an arithmetic share of the indication bit ( $\langle \mathbf{1}\{a=b\}\rangle_0^A$ ), and P1 receives an arithmetic share of the indication bit ( $\langle \mathbf{1}\{a=b\}\rangle_1^A$ ).

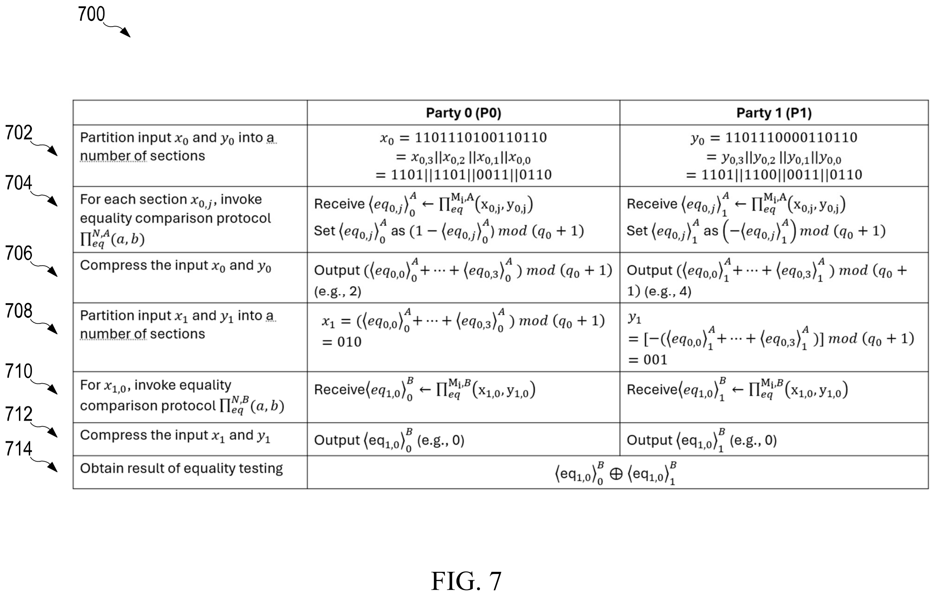

FIG. 7 illustrates an example process 700 of equality testing in a secure two-party computation (MPC) system. A first party participating in the secure MPC is denoted as Party 0 (P0), and a second party participating in the secure MPC is denoted as Party 1 (P1). The equality testing aims to determine whether two private inputs are equal (e.g., whether $a = b$), without disclosing the private inputs to any party.

As starter, the first party P0 has an arithmetic share of the private input $a$ denoted as $\langle a \rangle_0^A$ and an arithmetic share of the private input $b$ denoted as $\langle b \rangle_0^A$. The second party P1 has an arithmetic share of the private input $a$ denoted as $\langle a \rangle_1^A$, and an arithmetic share of the private input $b$ denoted as $\langle b \rangle_1^A$. The sum of arithmetic shares is the private input, such that $\langle a \rangle_0^A + \langle a \rangle_1^A = a$, and $\langle b \rangle_0^A + \langle b \rangle_1^A = b$. For example, the secure MPC can generate a random integer as $\langle a \rangle_0^A$ and send it to P0, and generate $a - \langle a \rangle_0^A$ as $\langle a \rangle_1^A$ and send it to P1. As such, the secure MPC system can determine whether $a = b$ by determining whether $\langle a \rangle_0^A - \langle b \rangle_0^A = \langle b \rangle_1^A - \langle a \rangle_1^A$.

The process 700 can determine whether $\langle a \rangle_0^A - \langle b \rangle_0^A = \langle b \rangle_1^A - \langle a \rangle_1^A$ in an iterative approach by invoking equality testing protocol $\prod_{cq}^{N,A}(a, b)$ and/or $\prod_{cq}^{N,B}(a, b)$. P0 generates $\langle a \rangle_0^A - \langle b \rangle_0^A$ as its initial input $x_0$, and P1 generates $\langle b \rangle_1^A - \langle a \rangle_1^A$ as its initial input $y_0$, where $x_0$ and $y_0$ are values in binary form.

At 702, in a first iteration of the process 700, P0 and P1 set $i = 0$. P0 partitions its input $x_i$ (which is $x_0$ for the first iteration) into a number of sections $x_{i,j}$, such that $x_i = x_{i,q_i-1} \| x_{i,q_i-2} \| ... \| x_{i,1} \| x_{i,0}$. The length of the input $x_i$ is $l_i$ bits. The length of each section is $m_i$ bits, so that the input is partitioned into $q_i = \lceil \frac{l_i}{m_i} \rceil$ sections. As an example, as shown in FIG. 7, P0 inputs $x_i = x_0 = 1101110100110110$, which is 16 bits in length. P0 can partition $x_0$ into four sections, each section being 4 bits in length: $x_{0,3} = 1101$, $x_{0,2} = 1101$, $x_{0,1} = 0011$, and $x_{0,0} = 0110$.

Similarly, P1 partitions its input $y_i$ (which is $y_0$ for the first iteration) into a number of sections $y_{i,j}$, such that $y_i = y_{i,q_i-1} \| y_{i,q_i-2} \| ... \| y_{i,0}$. The length of the input $y_i$ is $l_i$ bits. The length of each section is $m_i$ bits, so that the input is partitioned into $q_i = \lceil \frac{l_i}{m_i} \rceil$ sections. As an example, as shown in FIG. 7, P1 inputs $y_i = y_0 = 1101110000110110$, which is 16 bits in length. P1 can partition $y_0$ into four sections, each section being 4 bits in length: $y_{0,3} = 1101$, $y_{0,2} = 1300$, $\| y_{0,1} = 0011$, and $y_{0,0} = 0110$. That is, $l_i = 16$, $m_i = 4$, and $q_i = 4$.

At 704, for each section $x_{i,j}$ and the corresponding section $y_{i,j}$ ($j = \{0, 1, ..., q_i - 1\}$), P0 and P1 can invoke the equality testing protocol $\prod_{cq}^{N,A}(a, b)$. P0 can receive an arithmetic share $\langle eq_{i,j} \rangle_0^A$ of an indicator $1\{x_{i,j} = y_{i,j}\}$, and P1 can receive an arithmetic share $\langle eq_{i,j} \rangle_1^A$ of the indicator $1\{x_{i,j} = y_{i,j}\}$.

As an example, for the section $x_{0,0} = 0110$ and $y_{0,0} = 0110$, by invoking the equality testing protocol $\prod_{cq}^{N,A}(a, b)$, P0 receives $\langle eq_{0,0} \rangle_0^A$ (e.g., 2), and P1 receives $\langle eq_{0,0} \rangle_1^A$ (e.g., 4).

Further, P1 can set $\langle eq_{i,j} \rangle_0^A$ as $(1 - \langle eq_{i,j} \rangle_0^A) \bmod (q+1)$, and P1 can set $\langle eq_{i,j} \rangle_1^A$ as $\left(- \langle eq_{i,j} \rangle_1^A\right) \bmod (q + 1)$. As such, $\left(\langle eq_{i,j} \rangle_0^A + \langle eq_{i,j} \rangle_1^A\right) \bmod (q + 1) = 0$ indicates that $x_{i,j} = y_{i,j}$.

At 706, P0 can output $\left(\langle eq_{i,0} \rangle_0^A + \cdots + \langle eq_{i,q_i-1} \rangle_0^A\right) \bmod(q_i + 1)$. P1 can output $\left(\langle eq_{i,0} \rangle_1^A + \cdots + \langle eq_{i,q_i-1} \rangle_1^A\right) \bmod(q_i + 1)$. When $x_i = y_i$, the sum of the two outputs is 0 when mod by $(q_i + 1)$. When $x_0 \neq y_0$, the sum of the two outputs is not 0 when mod by $(q_i + 1)$. As one example, as shown in FIG. 7, in the first iteration of the process 700, P0's input $x_0$, which is 16 bits in length, is compressed into the output of one integer $\left(\langle eq_{i,0} \rangle_0^A + \cdots + \langle eq_{i,q_i-1} \rangle_0^A\right) \bmod(q_i + 1)$, which can be represented by 3 bits (e.g., 2=010). P1's input $y_0$, which is 16 bits in length, is compressed into the output of one integer $\left(\langle eq_{i,0} \rangle_1^A + \cdots + \langle eq_{i,q_i-1} \rangle_1^A\right) \bmod(q_i + 1)$, which can

also be represented by 3 bits (e.g., 4=100).

At 708, the process 700 proceeds to a second iteration, where P0 and P1 set i = 1. The output of the first iteration can be the input of the second iteration. The input of P0 is $x_i = \left( \langle eq_{i-1,0} \rangle_0^A + \cdots + \langle eq_{i-1,q_i-1} \rangle_0^A \right) mod(q_i + 1)$. The input of P1 is $y_i = [- \left( \langle eq_{i,0} \rangle_1^A + \cdots + \langle eq_{i,q_i-1} \rangle_1^A \right)] mod(q_i + 1)$. The secure MPC system can determine whether $x_0 = y_0$ by determining whether $x_1 = y_1$.

In some implementations, the following iterations (including the second iteration) can be performed by invoking the equality testing protocol $\prod_{cq}^{N,A}(a,b)$. In some implementations, some of the following iterations (e.g., the last iteration) can be performed by invoking another equality testing protocol $\prod_{cq}^{N,B}(a,b)$.

At 708, P0 can partition its input $x_i$ into a number of sections $x_{i,j}$, such that $x_i = x_{i,q_i-1} \| x_{i,q_i-2} \| \ldots \| x_{i,1} \| x_{i,0}$. The length of the input $x_i$ is $l_i$ bits. The length of each section is $m_i$ bits, so that the input is partitioned into $q_i = \lceil \frac{l_i}{m_i} \rceil$ sections. As an example, as shown in FIG. 7, P0 inputs $x_i = x_1 = 010$, which is 3 bits in length. $x_1$ can be viewed as a single section $x_1 = x_{1,0}$. That is, $l_i = 3$, $m_i = 3$, and $q_i = 1$.

Similarly, P1 partitions its input $y_i$ into a number of sections $y_{i,j}$, such that $y_i = y_{i,q_i-1} \| y_{i,q_i-2} \| \ldots \| y_{i,0}$. The length of the input $y_i$ is $l_i$ bits. The length of each section is $m_i$ bits, so that the input is partitioned into $q_i = \lceil \frac{l_i}{m_i} \rceil$ sections. As an example, as shown in FIG. 7, P1 inputs $y_i = y_1 = 001$, which is 3 bits in length. $y_1$ can be viewed as a single section $y_1 = y_{1,0}$.

At 710, for each section $x_{i,j}$ and the corresponding section $y_{i,j}$ ($j = \{0,1, \ldots, q_i - 1\}$), P0 and P1 can invoke the equality testing protocol $\prod_{cq}^{N,B}(a,b)$.

At 712, P0 can receive a Boolean share $\langle eq_{i,j} \rangle_0^B$ of an indicator $\mathbf{1}\{x_{i,j} = y_{i,j}\}$, and P1 can receive a Boolean share $\langle eq_{i,j} \rangle_1^{AB}$ of the indicator $\mathbf{1}\{x_{i,j} = y_{i,j}\}$.

As an example, for the section $x_{1,0} = 0110$ and $y_{1,0} = 0110$, by invoking the equality testing protocol $\prod_{cq}^{N,B}(a,b)$, P0 receives $\langle eq_{1,0} \rangle_0^B$ (e.g., 1), and P1 receives $\langle eq_{1,0} \rangle_1^B$ (e.g., 1).

The process 700 can include multiple rounds of iteration, until the initial input $x_0$ and $y_0$ are each compressed to a single bit. In the last iteration, P0 and P1 each output a single bit.

At 714, by performing an XOR operation on the single-bit output of the last iteration, the secure MPC can determine whether $a = b$. In this way, through the iterative approach by invoking equality testing protocol, the secure MPC system can obtain the result of equality testing.

Below is an example algorithm for process 700.

$P_0$ locally computes $\langle d \rangle_0^A = \langle a \rangle_0^A - \langle b \rangle_0^A$, $P_1$ locally computes $\langle d \rangle_1^A = \langle a \rangle_1^A - \langle b \rangle_1^A$.

$P_0$ sets $x_0 = \langle d \rangle_0^A$, $P_1$ sets $y_0 = -\langle d \rangle_1^A$.

$P_0$ and $P_1$ set $i = 0$.

**do**

$P_0$ parses its input as $x_i = x_{i,q_i-1} \| x_{i,q_i-2} \| \ldots \| x_{i,0}$, and $P_1$ parses its input as $y_i = y_{i,q_i-1} \| y_{i,q_i-2} \| \ldots \| y_{i,0}$, where $x_{i,j}, y_{i,j} \in \{0,1\}^{m_i}$, $q_i = \lceil \frac{l_i}{m_i} \rceil$, the bit lengths of $x_i$ and $y_i$ are equal, denoted as $l_i$.

Let $M_i = 2^{m_i}$

**for** $j = \{0,1,\ldots,q_i - 1\}$ **do**

$$\left( \left\langle \mathrm{eq}_{i,j} \right\rangle_0^A, \left( \left\langle \mathrm{eq}_{i,j} \right\rangle_1^A \right) \right) \leftarrow \Pi_{\mathrm{eq}_1}^{M_i, A}(x_{i,j}, y_{i,j})$$

$$\left( \left\langle eq_{i,j} \right\rangle_0^A, \left\langle eq_{i,j} \right\rangle_1^A \right) \leftarrow \left( 1 - \left\langle eq_{i,j} \right\rangle_0^A, -\left\langle eq_{i,j} \right\rangle_1^A \right)$$

**end for**

$P_0$ sets $x_{i+1} = (\left\langle eq_{i,0} \right\rangle_0^A + \cdots + \left\langle eq_{i,q_i-1} \right\rangle_0^A) \bmod (q_i + 1)$

$P_1$ sets $y_{i+1} = \left[ -\left( \left\langle eq_{i,0} \right\rangle_1^A + \cdots + \left\langle eq_{i,q_i-1} \right\rangle_1^A \right) \right] \bmod (q_i + 1)$

$P_0$ and $P_1$ compute $i = i + 1$.

**while** $q_{i-1} > T$, $T$ is threshold value

**do**

$P_0$ parses its input as $x_i = x_{i,q_i-1} \| x_{i,q_i-2} \| \ldots \| x_{i,0}$, and $P_1$ parses its input as $y_i = y_{i,q_i-1} \| y_{i,q_i-2} \| \ldots \| y_{i,0}$, where $x_{i,j}, y_{i,j} \in \{0,1\}^{m_i}$, $q_i = \lceil \frac{l_i}{m_i} \rceil$, the bit lengths of $x_i$ and $y_i$ are equal, denoted as $l_i$.

Let $M_i = 2^{m_i}$

**for** $j = \{0,1,\dots,q_i - 1\}$ **do**

    **if** $q_i > 1$

$$\left(\left\langle \mathrm{eq}_{i,j}\right\rangle_0^B, \left(\left\langle \mathrm{eq}_{i,j}\right\rangle_1^B\right)\right) \leftarrow \prod_{\mathrm{cq}}^{M_i,B}\left(x_{i,j}, y_{i,j}\right)$$

$$\left(\langle eq_{i,j}\rangle_0^B, \langle eq_{i,j}\rangle_1^B\right) \leftarrow \left(\langle eq_{i,j}\rangle_0^B, \langle eq_{i,j}\rangle_1^B \oplus 1\right)$$

    **else**

$$\left(\left\langle \mathrm{eq}_{i,j}\right\rangle_0^B, \left(\left\langle \mathrm{eq}_{i,j}\right\rangle_1^B\right)\right) \leftarrow \prod_{\mathrm{cq}}^{M_i,B}\left(x_{i,j}, y_{i,j}\right)$$

    **end if**

**end for**

$P_0$ sets $x_{i+1} = \left\langle eq_{i,0}\right\rangle_0^B || \dots || \left\langle eq_{i,q_i-1}\right\rangle_0^B$

$P_1$ sets $y_{i+1} = \left\langle eq_{i,0}\right\rangle_1^B || \dots || \left\langle eq_{i,q_i-1}\right\rangle_1^B$

$P_0$ and $P_1$ compute $i = i + 1$.

**while** $q_{i-1} > 1$

$P_0$ and $P_1$ set their output as $\left\langle \mathrm{eq}_{i-1,0}\right\rangle_0^B$ and $\left\langle \mathrm{eq}_{i-1,0}\right\rangle_1^B$, respectively.

---

In some implementations, the last round iteration of process 700 can be performed based on AND operation, instead of based on equality testing protocol. In the last iteration where PO's input is $x_n = \left\langle \mathrm{eq}_{n-1,q_{n-1}-1}\right\rangle_0^B || \dots || \left\langle \mathrm{eq}_{n-1,0}\right\rangle_0^B$ and PO's input is $y_n = \left\langle \mathrm{eq}_{n-1,q_{n-1}-1}\right\rangle_1^B || \dots || \left\langle \mathrm{eq}_{n-1,0}\right\rangle_1^B$, the secure MPC can determine whether $x_n = y_n$ by computing $\mathbf{1}\left\{\left\langle \mathrm{eq}_{n-1,q_{n-1}-1}\right\rangle_0^B = \left\langle \mathrm{eq}_{n-1,q_{n-1}-1}\right\rangle_0^B\right\} AND \dots AND\ \mathbf{1}\left\{\left\langle \mathrm{eq}_{n-1,q_0-1}\right\rangle_0^B = \left\langle \mathrm{eq}_{n-1,q_0-1}\right\rangle_0^B\right\}$. If the result of the AND operations is 1, $x_n = y_n$. If the result of the AND operations is 0, $x_n \neq y_n$.

Below is an example algorithm for process 700 where the last iteration performs equality testing based on AND operations.

---

$P_0$ locally computes $\langle d\rangle_0^A = \langle a\rangle_0^A - \langle b\rangle_0^A$, $P_1$ locally computes $\langle d\rangle_1^A = \langle a\rangle_1^A - \langle b\rangle_1^A$.

$P_0$ sets $x_0 = \langle d\rangle_0^A$, $P_1$ sets $y_0 = -\langle d\rangle_1^A$.

$P_0$ and $P_1$ set $i = 0$.

**do**

$P_0$ parses its input as $x_i = x_{i,q_i-1}\|x_{i,q_i-2}\|...\|x_{i,0}$, and $P_1$ parses its input as $y_i = y_{i,q_i-1}\|y_{i,q_i-2}\|...\|y_{i,0}$, where $x_{i,j}, y_{i,j} \in \{0,1\}^{m_i}$, $q_i = \lceil \frac{l_i}{m_i} \rceil$, the bit lengths of $x_i$ and $y_i$ are equal, denoted as $l_i$.

Let $M_i = 2^{m_i}$

**for** $j = \{0,1,...,q_i-1\}$ **do**

    **if** $q_i > T$

$$\left( \left\langle eq_{i,j} \right\rangle_0^A, \left( \left\langle eq_{i,j} \right\rangle_1^A \right) \right) \leftarrow \prod_{cq}^{M_i,A}(x_{i,j}, y_{i,j})$$

$$\left( \langle eq_{i,j} \rangle_0^A, \langle eq_{i,j} \rangle_1^A \right) \leftarrow (1 - \langle eq_{i,j} \rangle_0^A, 1 - \langle eq_{i,j} \rangle_1^A)$$

    **else**

$$\left( \left\langle eq_{i,j} \right\rangle_0^A, \left( \left\langle eq_{i,j} \right\rangle_1^A \right) \right) \leftarrow \prod_{cq}^{M_i,A}(x_{i,j}, y_{i,j})$$

    **end if**

**end for**

$P_0$ sets $x_{i+1} = (\langle eq_{i,0} \rangle_0^A + \cdots + \langle eq_{i,q_i-1} \rangle_0^A) \, mod(q_i + 1)$

$P_1$ sets $y_{i+1} = [- \left( \langle eq_{i,0} \rangle_1^A + \cdots + \langle eq_{i,q_i-1} \rangle_1^A \right)] \, mod(q_i + 1)$

$P_0$ and $P_1$ compute $i = i + 1$.

**while** $q_{i-1} > T$, $T$ is threshold value

$P_0$ parses its input as $x_i = \langle eq_{i,0} \rangle_0^B \| ... \| \langle eq_{i,q_i-1} \rangle_0^B$, and $P_1$ parses its input as $y_i = \langle eq_{i,0} \rangle_1^B \| ... \| \langle eq_{i,q_i-1} \rangle_1^B$. $q_i$ is the bit length of $x_i$ and $y_i$.

**for** $k = \{1,...,\lceil log(q_i) \rceil\}$ **do**

    **for** $j = \{0,...,q_i/2^k - 1\}$ **do**

        for $b \in \{0,1\}$, $P_b$ invokes **AND** with inputs $\langle eq_{k-1,2j} \rangle_b^B$ and $\langle eq_{k-1,2j+1} \rangle_b^B$ to learn output $\langle eq_{k,j} \rangle_b^B$.

    **end for**

**end for**

$P_0$ and $P_1$ set their output as $\langle eq_{\lceil log(q_i) \rceil, 0} \rangle_0^B$ and $\langle eq_{\lceil log(q_i) \rceil, 0} \rangle_1^B$, respectively.

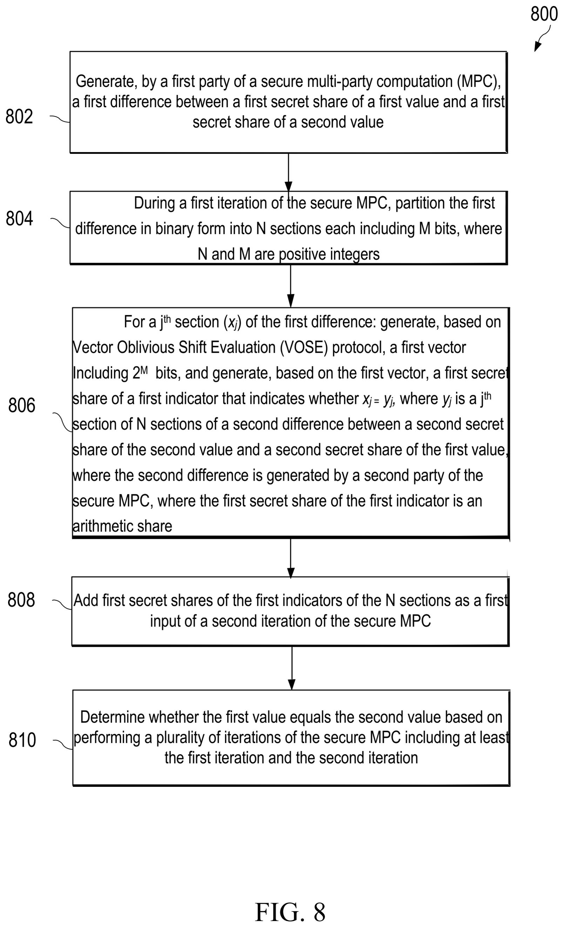

FIG. 8 illustrates a flow chart of the example method 800 of performing equality testing as shown in FIG. 7. The operations shown in method 800 may not be exhaustive and that other operations can be performed as well before, after, or in between any of the illustrated operations. Further, some of the operations may be performed simultaneously, or in a different order than shown in FIG. 8. In some implementations, some of the operations may be performed by a computer, or multiple computers based on secure MPC.

At 802, a first party (e.g., P0 of FIG. 7) of a secure multi-party computation (MPC) generates a first difference (e.g., $x_0$ of FIG. 7) between a first secret share (e.g., arithmetic share $\langle a \rangle_0^A$) of a first value (e.g., private $a$) and a first secret share (e.g., arithmetic share $\langle b \rangle_0^A$ of a second value (e.g., private input $b$). The second party (e.g., P1 of FIG. 7) of the secure MPC generates a second difference (e.g., $y_0$ of FIG. 7) between a second secret share (e.g., arithmetic share $\langle b \rangle_1^A$

of the second value and a second secret share (e.g., arithmetic share $\langle a \rangle_1^A$) of the first value.

At 804, during a first iteration of the secure MPC, the first party partitions the first difference into N sections (e.g., $x_0 = x_{0,3}\|x_{0,2}\|x_{0,1}\|x_{0,0}$) each including M bits, where N and M are positive integers. The second party partitions the second difference into N sections (e.g., $y_0 = y_{0,3}\|y_{0,2}\|y_{0,1}\|y_{0,0}$) each including M bits.

At 806, for a $j^{th}$ section ($x_j$) of the first difference, the first party generates, based on Vector Oblivious Shift Evaluation (VOSE) protocol (e.g., $\prod_{vose}^{N,A}(\vec{T'})$ using Arithmetic operation), a first vector (e.g., $\vec{T_0}$) including $2^M$ bits, and generates, based on the first vector, a first secret share (e.g., $\langle eq_{0,j} \rangle_0^A$ of FIG. 7) of a first indicator that indicates whether $x_j = y_j$, where $y_j$ is a $j^{th}$ section of N sections of the second difference. The second party generates, based on the VOSE protocol, a second vector (e.g., $\vec{T_1}$) including $2^M$ bits, and generates, based on the second vector, a second secret share (e.g., $\langle eq_{0,j} \rangle_1^A$ of FIG. 7) of the first indicator. The first and second secret shares of the first indicator are arithmetic shares.

In some implementations, the first vector and the second vector and generated through local computation of the first party and the second party.

At 808, the first party adds first secret shares of the first indicators of the N sections as a first input (e.g., $x_1$ of FIG. 7) of a second iteration of the secure MPC. The second party adds second secret shares of the first indicators of the N sections as a second input (e.g., $y_1$ of FIG. 7) of the second iteration.

In some implementations, during the second iteration, the first party partitions the first input into R sections each including K bits, where R and K are positive integers. For a $j^{th}$ section ($t_j$) of the first input, where $j = 0, 1, ... , R - 1$, the first party generates, based on VOSE protocol, a third vector including $2^K$ bits, and generating, based on the third vector, a first secret share (e.g., $\langle eq_{1,0} \rangle_1^B$ of FIG. 7) of a second indicator that indicates whether $t_j = g_j$, where $g_j$ is a $j^{th}$ section of R sections of the second input. The second party generates, based on VOSE protocol, a fourth vector including $2^K$ bits, and generating, based on the fourth vector, a second secret share (e.g., $\langle eq_{1,0} \rangle_1^B$ of FIG. 7) of the second indicator that indicates whether $t_j = g_j$.

In some implementations, the VOSE protocol invoked during the second iteration is based on Boolean operation (e.g., $\prod_{vose}^{N,B}(\vec{T'})$), and the secret shares of the second indicator are Boolean shares. In some implementations, the VOSE protocol invoked during the second iteration is based on Arithmetic operation (e.g., $\prod_{vose}^{N,A}(\vec{T'})$), and secret shares of the second indicator are arithmetic shares.

At 810, the secure MPC determines whether the first value equals the second value based on results of a plurality of iterations of the secure MPC. The plurality of iterations includes at least the first iteration and the second iteration.

In some implementations, the last iteration of the plurality of iterations is performed based on AND operations. The secure MPC determines whether the first value and the second value are equal by performing one or more AND operations on a first input and a second input of the last iteration.

In some implementations, the secure MPC is secure two-party computation.

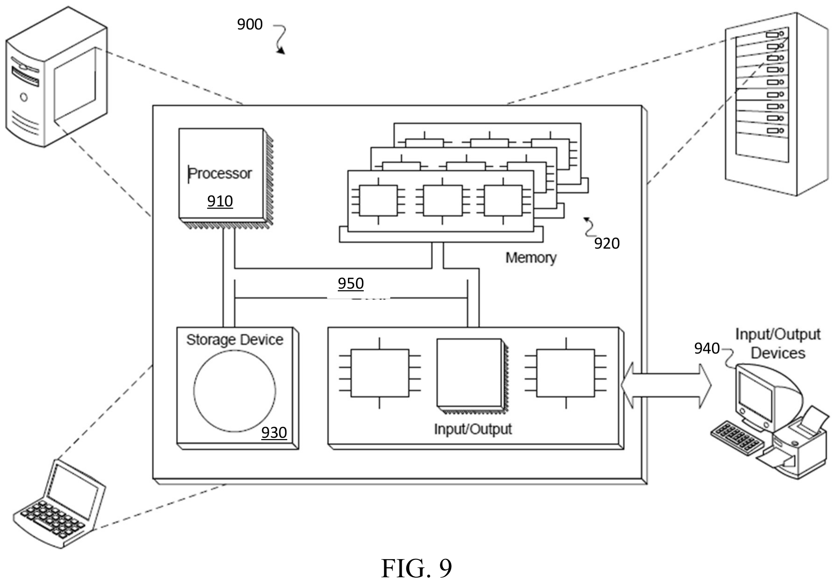

FIG. 9 illustrates a schematic diagram of an example computing system 900. The system 900 can be used for the operations described in association with the implementations described herein. For example, the system 900 may be included in computing devices of the one or more online components and/or the one or more offline components. The system 900 includes a processor 910, a memory 920, a storage device 930, and an input/output device 940, which are interconnected using a system bus 950. The processor 910 is capable of processing instructions for execution within the system 900. In some implementations, the processor 910 is a single-threaded processor. The processor 910 is a multi-threaded processor. The processor 910 is capable of processing instructions stored in the memory 920 or on the storage device 930 to display graphical information for a user interface on the input/output device 940.

The memory 920 stores information within the system 900. In some implementations, the memory 920 is a computer-readable medium. The memory 920 can be a volatile memory unit or a non-volatile memory unit. The storage device 930 is capable of providing mass storage for the system 900. The storage device 930 is a computer-readable medium. The storage device 930 may be a floppy disk device, a hard disk device, an optical disk device, or a tape device. The input/output device 940 provides input/output operations for the system 900. The input/output device 940 includes a keyboard and/or pointing device. The input/output device 940 includes a display unit for displaying graphical user interfaces.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random-access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship with each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

As used in this disclosure, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, the phraseology or terminology employed in this disclosure, and not otherwise defined, is for the purpose of description only and not of limitation. Any use of section headings is intended to aid reading of the document and is not to be interpreted as limiting; information that is relevant to a section heading may occur within or outside of that particular section.

As used in this disclosure, the term "about" or "approximately" can allow for a degree of variability in a value or range, for example, within 10%, within 5%, or within 1% of a stated value or of a stated limit of a range.

As used in this disclosure, the term "substantially" refers to a majority of, or mostly, as in at least about 50%, 60%, 70%, 80%, 90%, 95%, 96%, 97%, 98%, 99%, 99.5%, 99.9%, 99.99%, or at least about 99.999% or more.

Values expressed in a range format should be interpreted in a flexible manner to include not only the numerical values explicitly recited as the limits of the range, but also the individual numerical values or sub-ranges encompassed within that range as if each numerical value and sub-range is explicitly recited. For example, a range of "0.1% to about 5%" or "0.1% to 5%" should be interpreted to include about 0.1% to about 5%, as well as the individual values (for example, 1%, 2%, 3%, and 4%) and the sub-ranges (for example, 0.1% to 0.5%, 1.1% to 2.2%, 3.3% to 4.4%) within the indicated range. The statement "X to Y" has the same meaning as "about X to about Y," unless indicated otherwise. Likewise, the statement "X, Y, or Z" has the same meaning as "about X, about Y, or about Z," unless indicated otherwise.

Particular implementations of the subject matter have been described. Other implementations, alterations, and permutations of the described implementations are within the scope of the following claims as will be apparent to those skilled in the art. While operations are depicted in the drawings or claims in a particular order, such operations are not required to be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations are not required in all implementations, and the described components and systems can generally be integrated together or packaged into multiple products.

Accordingly, the previously described example implementations do not define or constrain the present disclosure.

The foregoing description of the specific implementations can be readily modified and/or adapted for various applications. Therefore, such adaptations and modifications are intended to be within the meaning and range of equivalents of the disclosed implementations, based on the teaching and guidance presented herein.

The breadth and scope of the present disclosure should not be limited by any of the above-described example implementations, but should be defined only in accordance with the following claims and their equivalents. Accordingly, other implementations also are within the scope of the claims.

**Claims**

**1.** A computer-implemented method (200), comprising:

generating (202), by a first party of a secure multi-party computation (MPC), a first difference between a first secret share of a first value and a first secret share of a second value;

during a first iteration of the secure MPC:

partitioning (204) the first difference into N sections each comprising M bits, where N and M are positive integers;
for each section of the N sections:

generating a first random bit;
generating, based on the first random bit, a first group of $2^M$ bits; and
sending, to a second party of the secure MPC based on oblivious transfer (OT) protocol, a first selected bit from the first group of $2^M$ bits; and

concatenating (208) first random bits of the N sections as a first input of a second iteration of the secure MPC; and

determining (210) whether the first value equals the second value based on performing a plurality of iterations of the secure MPC comprising at least the first iteration and the second iteration.

2. The computer-implemented method (200) of claim 1, comprising:
concatenating, by the second party, first selected bits of the N sections as a second input of the second iteration.

3. The computer-implemented method (200) of claim 1 or 2, comprising:
during the second iteration:

partitioning the first input into R sections each comprising M bits, where R is a positive integer;
for each section of the R sections:

generating a second random bit;
generating, based on the second random bit, a second group of $2^M$ bits; and
sending, to the second party based on the OT protocol, a second selected bit from the second group of $2^M$ bits.

4. The computer-implemented method (200) of claim 1, 2 or 3, wherein generating the first group of $2^M$ bits comprises:
generating a $k^{th}$ bit, (k=0, 1, 2, ..., $2^M$-1), of the first group of $2^M$ bits by performing an exclusive OR (XOR) operation on the first random bit and an indicator bit, wherein the indicator bit is 0 when the a value of the corresponding section equals k, and the indicator bit is 1 when the value of the corresponding section is not equal to k.

5. The computer-implemented method (200) of claim 4, wherein the first selected bit is the $Q^{th}$ bit of the first group of $2^M$ bits, wherein Q equals a value of a section of a second difference corresponding to the section of the first difference, wherein the second difference is between a second secret share of the second value and a second secret share of the first value.

6. The computer-implemented method (200) of claim 5, wherein:

a result of an XOR operation on the first random bit and the first selected bit is 0 when the value of the section of the first difference and the value of the corresponding section of the second difference are equal; and
the result of the XOR operation on the first random bit and the first selected bit is 1 when the value of the section of the first difference and the value of the corresponding section of the second difference are not equal.

7. The computer-implemented method (200) of any preceding claim, comprising:

during a last iteration of the plurality of iterations:

generating a last random bit for a first input of the last iteration;
generating, based on the last random bit, a last group of $2^M$ bits; and
sending, to the second party based on the OT protocol, a last selected bit from the last group of $2^M$ bits,

wherein determining whether the first value and the second value are equal comprises:
performing an XOR operation on the last random bit and the last selected bit.

8. The computer-implemented method (200) of any preceding claim, wherein determining whether the first value and the second value are equal comprises:
performing one or more AND operations on a first input and a second input of a last iteration of the plurality of iterations.

9. The computer-implemented method (200) of claim 5, wherein the first secret share of the first value and the second secret share of the first value are arithmetic shares of the first value, and wherein the first secret share of the second value and the second secret share of the second value are arithmetic shares of the second value.

10. The computer-implemented method (200) of any preceding claim, wherein the secure MPC is a secure two-party computation.

11. One or more computer-readable storage media storing one or more instructions that, when executable by one or more computers, cause the one or more computers to perform the method according to any of claims 1-10.

12. A computer-implemented system (900) comprising:

one or more computers; and
one or more computer memory devices interoperably coupled with the one or more computers and having computer-readable storage media storing one or more instructions that, when executed by the one or more computers, perform the method (200) according to any of claims 1-10.

EP 4 727 055 A1

100

| | Party 0 (P0) | Party 1 (P1) |
|---|---|---|
| Partition input $x_0$ and $y_0$ into a number of sections | $x_0 = 1101110100110110$ $= x_{0,3}\|x_{0,2}\|x_{0,1}\|x_{0,0}$ $= 1101\|1101\|0011\|0110$ | $y_0 = 1101110000110110$ $= y_{0,3}\|y_{0,2}\|y_{0,1}\|y_{0,0}$ $= 1101\|1100\|0011\|0110$ |
| For each section $x_{0,j}$, invoke oblivious transfer (OT) protocol | Generate a group of 16 bits $t_{0,j,0}$ to $t_{0,j,15}$: $t_{0,j,0} = \langle eq_{0,j} \rangle_0^B \oplus \mathbf{1}\{x_{0,j} \neq 0\}$ $t_{0,j,1} = \langle eq_{0,j} \rangle_0^B \oplus \mathbf{1}\{x_{0,j} \neq 1\}$ ... $t_{0,j,15} = \langle eq_{0,j} \rangle_0^B \oplus \mathbf{1}\{x_{0,j} \neq 15\}$ | Obtain $\langle eq_{0,j} \rangle_1^B = t_{0,j,y_{0,j}}$ $= \langle eq_{0,j} \rangle_0^B \oplus \mathbf{1}\{x_{0,j} \neq y_{0,j}\}$ |
| Compress the input $x_0$ and $y_0$ | Output $\langle eq_{0,3} \rangle_0^B \| \langle eq_{0,2} \rangle_0^B \| \langle eq_{0,1} \rangle_0^B \| \langle eq_{0,0} \rangle_0^B$ (e.g., 0011) | Output $\langle eq_{0,3} \rangle_1^B \| \langle eq_{0,2} \rangle_1^B \| \langle eq_{0,1} \rangle_1^B \| \langle eq_{0,0} \rangle_1^B$ (e.g., 0111) |
| Partition input $x_1$ and $y_1$ into a number of sections | $x_1 = 0011 = x_{1,0}$ | $y_1 = 0111 = y_{1,0}$ |
| For $x_{1,0}$, invoke OT protocol | Generate a group of 16 bits $t_{1,0,0}$ to $t_{1,0,15}$: $t_{1,0,0} = \langle eq_{1,0} \rangle_0^B \oplus \mathbf{1}\{x_{1,0} \neq 0\}$ $t_{1,0,1} = \langle eq_{1,0} \rangle_0^B \oplus \mathbf{1}\{x_{1,0} \neq 1\}$ ... $t_{1,0,15} = \langle eq_{1,0} \rangle_0^B \oplus \mathbf{1}\{x_{1,0} \neq 15\}$ | Obtain $\langle eq_{1,0} \rangle_1^B = t_{1,0,y_{1,0}}$ $= \langle eq_{1,0} \rangle_0^B \oplus \mathbf{1}\{x_{1,0} \neq y_{1,0}\}$ |
| Compress the input $x_1$ and $y_1$ | Output $\langle eq_{1,0} \rangle_0^B$ (e.g., 0) | Output $\langle eq_{1,0} \rangle_1^B$ (e.g., 1) |
| Obtain result of equality testing | $\langle eq_{1,0} \rangle_0^B \oplus \langle eq_{1,0} \rangle_1^B$ | |

FIG. 1

200

202 — Generate, by a first party of a secure multi-party computation (MPC), a first difference between a first secret share of a first value and a first secret share of a second value

204 — During a first iteration of the secure MPC, partition the first difference in binary form into N sections each including M bits, where N and M are positive integers

206 — For each section of the N sections: generate a first random bit, generate, based on the first random bit, a first group of $2^M$ bits, and send, to a second party of the secure MPC based on oblivious transfer (OT) protocol, a first selected bit from the first group of $2^M$ bits

208 — Concatenate first random bits of the N sections as a first input of a second iteration of the secure MPC

210 — Determine whether the first value equals the second value based on performing a plurality of iterations of the secure MPC comprising at least the first iteration and the second iteration

FIG. 2

300

| | Party 0 (P0) | Party 1 (P1) |
|---|---|---|
| **302** Partition input $x_0$ and $y_0$ into a number of sections | $x_0 = 1101110100110110$<br>$= x_{0,3}\|\|x_{0,2}\|\|x_{0,1}\|\|x_{0,0}$<br>$= 1101\|\|1101\|\|0011\|\|0110$ | $y_0 = 1101110000110110$<br>$= y_{0,3}\|\|y_{0,2}\|\|y_{0,1}\|\|y_{0,0}$<br>$= 1101\|\|1100\|\|0011\|\|0110$ |
| **304** For each section $x_{0,j}$, invoke oblivious transfer (OT) protocol | Generate a group of 16 integers $t_{0,j,0}$ to $t_{0,j,15}$:<br>$t_{0,j,0} = \left(1\{x_{0,j} \neq 0\} - \langle eq_{0,j}\rangle_0^A\right) mod\ (q_0 + 1)$<br>$t_{0,j,1} = \left(1\{x_{0,j} \neq 1\} - \langle eq_{0,j}\rangle_0^A\right) mod\ (q_0 + 1)$<br>$\dots$<br>$t_{0,j,15} = \left(1\{x_{0,j} \neq 15\} - \langle eq_{0,j}\rangle_0^A\right) mod\ (q_0 + 1)$ | Obtain $\langle eq_{0,j}\rangle_1^A = t_{0,j,y_{0,j}}$<br>$= \left(1\{x_{0,j} \neq y_{0,j}\} - \langle eq_{0,j}\rangle_0^A\right) mod\ (q_0 + 1)$ |
| **306** Compress the input $x_0$ and $y_0$ | Output $(\langle eq_{0,0}\rangle_0^A + \cdots + \langle eq_{0,3}\rangle_0^A)\ mod\ (q_0 + 1)$<br>(e.g., 2) | Output $(\langle eq_{0,0}\rangle_1^A + \cdots + \langle eq_{0,3}\rangle_1^A)\ mod\ (q_0 + 1)$<br>(e.g., 4) |
| **308** Partition input $x_1$ and $y_1$ into a number of sections | $x_1 = (\langle eq_{0,0}\rangle_0^A + \cdots + \langle eq_{0,3}\rangle_0^A)\ mod\ (q_0 + 1)$<br>$= 010$ | $y_1 = [-(\langle eq_{0,0}\rangle_1^A + \cdots + \langle eq_{0,3}\rangle_1^A)]\ mod\ (q_0 + 1)$<br>$= 001$ |
| **310** For $x_{1,0}$, invoke OT protocol | Generate a group of 8 bits $t_{1,0,0}$ to $t_{1,0,7}$:<br>$t_{1,0,0} = \langle eq_{1,0}\rangle_0^B \oplus \mathbf{1}\{x_{1,0} = 0\}$<br>$t_{1,0,1} = \langle eq_{1,0}\rangle_0^B \oplus \mathbf{1}\{x_{1,0} = 1\}$<br>$\dots$<br>$t_{1,0,7} = \langle eq_{1,0}\rangle_0^B \oplus \mathbf{1}\{x_{1,0} = 7\}$ | Obtain $\langle eq_{1,0}\rangle_1^B = t_{1,0,y_{1,0}}$<br>$= \langle eq_{1,0}\rangle_0^B \oplus \mathbf{1}\{x_{1,0} = y_{1,0}\}$ |
| **312** Compress the input $x_1$ and $y_1$ | Output $\langle eq_{1,0}\rangle_0^B$ (e.g., 0) | Output $\langle eq_{1,0}\rangle_1^B$ (e.g., 0) |
| **314** Obtain result of equality testing | $\langle eq_{1,0}\rangle_0^B \oplus \langle eq_{1,0}\rangle_1^B$ | |

FIG. 3

EP 4 727 055 A1

36

400

```
┌─────────────────────────────────────────────────────┐
│  Generate, by a first party of a secure multi-party  │
│  computation (MPC), a first difference between a      │
│  first secret share of a first value and a first      │
│  secret share of a second value                       │
└─────────────────────────────────────────────────────┘
```

402

```
┌─────────────────────────────────────────────────────┐
│  During a first iteration of the secure MPC, partition│
│  the first difference in binary form into N sections  │
│  each including M bits, where N and M are positive    │
│  integers                                             │
└─────────────────────────────────────────────────────┘
```

404

```
┌─────────────────────────────────────────────────────┐
│  For each section of the N sections: generate a       │
│  random integer between 0 and N, generate, based on   │
│  the random number, a group of $2^M$ integers, and    │
│  send, to a second party of the secure MPC based on   │
│  oblivious transfer (OT) protocol, a selected integer │
│  from the group of $2^M$ numbers                      │
└─────────────────────────────────────────────────────┘
```

406

```
┌─────────────────────────────────────────────────────┐
│  Add random integers of the N sections as a first     │
│  input of a second iteration of the secure MPC        │
└─────────────────────────────────────────────────────┘
```

408

```
┌─────────────────────────────────────────────────────┐
│  Determine whether the first value equals the second  │
│  value based on performing a plurality of iterations  │
│  of the secure MPC comprising at least the first      │
│  iteration and the second iteration                   │
└─────────────────────────────────────────────────────┘
```

410

FIG. 4

FIG. 5

For $i \in [n]$, right circular shift the $i^{th}$ row $i$ times.

For $i \in [n]$, right circular shift the $i^{th}$ row $i$ times.

FIG. 6

700

EP 4 727 055 A1

| | Party 0 (P0) | Party 1 (P1) |
|---|---|---|
| 702 Partition input $x_0$ and $y_0$ into a number of sections | $x_0 = 1101110100110110$ $= x_{0,3} \|\| x_{0,2} \|\| x_{0,1} \|\| x_{0,0}$ $= 1101\|\|1101\|\|0011\|\|0110$ | $y_0 = 1101110000110110$ $= y_{0,3} \|\| y_{0,2} \|\| y_{0,1} \|\| y_{0,0}$ $= 1101\|\|1100\|\|0011\|\|0110$ |
| 704 For each section $x_{0,j}$, invoke equality comparison protocol $\prod_{eq}^{N,A}(a,b)$ | Receive $\langle eq_{0,j} \rangle_0^A \leftarrow \prod_{eq}^{M_i,A}(x_{0,j}, y_{0,j})$ Set $\langle eq_{0,j} \rangle_0^A$ as $(1 - \langle eq_{0,j} \rangle_0^A) \bmod (q_0 + 1)$ | Receive $\langle eq_{0,j} \rangle_1^A \leftarrow \prod_{eq}^{M_i,A}(x_{0,j}, y_{0,j})$ Set $\langle eq_{0,j} \rangle_1^A$ as $(-\langle eq_{0,j} \rangle_1^A) \bmod (q_0 + 1)$ |
| 706 Compress the input $x_0$ and $y_0$ | Output $(\langle eq_{0,0} \rangle_0^A + \cdots + \langle eq_{0,3} \rangle_0^A) \bmod (q_0 + 1)$ (e.g., 2) | Output $(\langle eq_{0,0} \rangle_1^A + \cdots + \langle eq_{0,3} \rangle_1^A) \bmod (q_0 + 1)$ (e.g., 4) |
| 708 Partition input $x_1$ and $y_1$ into a number of sections | $x_1 = (\langle eq_{0,0} \rangle_0^A + \cdots + \langle eq_{0,3} \rangle_0^A) \bmod (q_0 + 1)$ $= 010$ | $y_1 = [-(\langle eq_{0,0} \rangle_1^A + \cdots + \langle eq_{0,3} \rangle_1^A)] \bmod (q_0 + 1)$ $= 001$ |
| 710 For $x_{1,0}$, invoke equality comparison protocol $\prod_{eq}^{N,B}(a,b)$ | Receive $\langle eq_{1,0} \rangle_0^B \leftarrow \prod_{eq}^{M_i,B}(x_{1,0}, y_{1,0})$ | Receive $\langle eq_{1,0} \rangle_1^B \leftarrow \prod_{eq}^{M_i,B}(x_{1,0}, y_{1,0})$ |
| 712 Compress the input $x_1$ and $y_1$ | Output $\langle eq_{1,0} \rangle_0^B$ (e.g., 0) | Output $\langle eq_{1,0} \rangle_1^B$ (e.g., 0) |
| 714 Obtain result of equality testing | $\langle eq_{1,0} \rangle_0^B \oplus \langle eq_{1,0} \rangle_1^B$ ||

FIG. 7

800

802 — Generate, by a first party of a secure multi-party computation (MPC), a first difference between a first secret share of a first value and a first secret share of a second value

804 — During a first iteration of the secure MPC, partition the first difference in binary form into N sections each including M bits, where N and M are positive integers

806 — For a $j^{th}$ section ($x_j$) of the first difference: generate, based on Vector Oblivious Shift Evaluation (VOSE) protocol, a first vector Including $2^M$ bits, and generate, based on the first vector, a first secret share of a first indicator that indicates whether $x_j = y_j$, where $y_j$ is a $j^{th}$ section of N sections of a second difference between a second secret share of the second value and a second secret share of the first value, where the second difference is generated by a second party of the secure MPC, where the first secret share of the first indicator is an arithmetic share

808 — Add first secret shares of the first indicators of the N sections as a first input of a second iteration of the secure MPC

810 — Determine whether the first value equals the second value based on performing a plurality of iterations of the secure MPC including at least the first iteration and the second iteration

FIG. 8

FIG. 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SATSUYA OHATA ET AL: "Communication-Efficient (Client-Aided) Secure Two-Party Protocols and Its Application", ARXIV.ORG, CORNELL UNIVERSITY LIBRARY, 201 OLIN LIBRARY CORNELL UNIVERSITY ITHACA, NY 14853, 8 July 2019 (2019-07-08), XP081571824, * section 4.1 * | 1-12 | INV. H04L9/08 |
| X | WO 2022/015403 A1 (MICROSOFT TECHNOLOGY LICENSING LLC [US]) 20 January 2022 (2022-01-20) * paragraphs [0054] - [0061]; figures 2A,2B * | 1-12 | |
| A | TIANPEI LU ET AL: "Efficient 2PC for Constant Round Secure Equality Testing and Comparison", IACR, INTERNATIONAL ASSOCIATION FOR CRYPTOLOGIC RESEARCH , vol. 20240613:062237 13 June 2024 (2024-06-13), pages 1-32, XP061087766, Retrieved from the Internet: URL:https://eprint.iacr.org/archive/2024/949/1718259757.pdf [retrieved on 2024-06-14] * sections III.a and B; figures 2,4,6 * | 1-12 | TECHNICAL FIELDS SEARCHED (IPC)  H04L |

The present search report has been drawn up for all claims

| Place of search | Date of completion of the search | Examiner |
|---|---|---|
| Munich | 13 February 2026 | Manet, Pascal |

EPO FORM 1503 03.82 (P04C01)

# EP 4 727 055 A1

## ANNEX TO THE EUROPEAN SEARCH REPORT
## ON EUROPEAN PATENT APPLICATION NO.

EP 25 20 8393

13-02-2026

| Patent document cited in search report | Publication date | Patent family member(s) | Publication date |
|---|---|---|---|
| WO 2022015403 A1 | 20-01-2022 | EP 4182851 A1 | 24-05-2023 |
| | | US 2023032519 A1 | 02-02-2023 |
| | | WO 2022015403 A1 | 20-01-2022 |

EPO FORM P0459